(19) Europäisches Patentamt
European Patent Office
Office européen des brevets

(11) EP 4 755 966 A1

(12) EUROPEAN PATENT APPLICATION
published in accordance with Art. 153(4) EPC

(43) Date of publication:
**10.06.2026 Bulletin 2026/24**

(21) Application number: **24849147.4**

(22) Date of filing: **29.07.2024**

(51) International Patent Classification (IPC):
*C08L 9/00* (2006.01) *C08K 3/013* (2018.01)
*C08K 3/36* (2006.01) *C08K 3/38* (2006.01)
*C08K 5/09* (2006.01) *C08K 5/17* (2006.01)
*C08K 5/31* (2006.01) *C08K 5/38* (2006.01)
*C08K 5/39* (2006.01) *C08K 5/40* (2006.01)
*C08K 5/42* (2006.01) *C08K 5/405* (2006.01)
*C08K 5/3445* (2006.01) *C08L 7/00* (2006.01)

(52) Cooperative Patent Classification (CPC):
**C08K 3/013; C08K 3/36; C08K 3/38; C08K 5/09; C08K 5/17; C08K 5/31; C08K 5/3445; C08K 5/38; C08K 5/39; C08K 5/40; C08K 5/405; C08K 5/42; C08L 7/00; C08L 9/00**

(86) International application number:
**PCT/JP2024/027032**

(87) International publication number:
**WO 2025/028496 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023125041**

(71) Applicant: **BRIDGESTONE CORPORATION**
**Chuo-ku**
**Tokyo 104-8340 (JP)**

(72) Inventors:
- **TAKADA Chie**
  **Tokyo 104-8340 (JP)**
- **KOBAYASHI Chikako**
  **Tokyo 104-8340 (JP)**

(74) Representative: **Marks & Clerk LLP**
**15 Fetter Lane**
**London EC4A 1BW (GB)**

# (54) METHOD FOR PRODUCING RUBBER COMPOSITION

(57) The object is to provide a method for producing a rubber composition by which a rubber composition that is excellent in low heat generating property and improves the ratio of sustainable materials in rubber products is obtained. The solution is a method for producing a rubber composition containing a rubber component (A) including at least one of natural rubber and synthetic diene-based rubber, a filler including an inorganic filler (B), a silane coupling agent (C), and a silica-silane coupling agent reaction accelerator compound (D), wherein the inorganic filler (B) includes plant-derived silica (B1). The rubber composition is kneaded in a plurality of stages, and the rubber component (A), all or part of the inorganic filler (B), all or part of the silane coupling agent (C), and the silica-silane coupling agent reaction accelerator compound (D) are kneaded in a first stage of kneading.

EP 4 755 966 A1

**Description**

TECHNICAL FIELD

The present disclosure relates to a method for producing a rubber composition.

BACKGROUND

In connection with the recent global movement toward carbon dioxide emission regulations due to heightened interest in environmental issues, there is an increasing demand for improved fuel efficiency in automobiles. To address such demands, improvement in high fuel efficiency (that is, reduction of rolling resistance) is required as a tire performance characteristic. Conventionally, methods for reducing the rolling resistance of tires have included optimizing tire structure, but currently, the most common method is to use a rubber composition with lower heat buildup as the rubber composition applied to the tire. As a method for obtaining such a rubber composition with excellent low heat generating property, a method using an inorganic filler such as silica as a filler is known. However, inorganic fillers (particularly silica) tend to aggregate in the rubber composition during compounding. To prevent aggregation of inorganic fillers (particularly silica), silane coupling agents are generally used, and various attempts have been made to improve the coupling function of such silane coupling agents (see PTL 1 to PTL 4).

CITATION LIST

Patent Literature

PTL 1: JP 2002-521515 A

PTL 2: JP 2002-521516 A

PTL 3: JP 2003-523472 A

PTL 4: JP 2003-530443 A

SUMMARY

(Technical Problem)

Meanwhile, from the perspective of social sustainability, there is a demand for increasing the ratio of so-called sustainable materials, such as materials derived from biological resources (biomass resources) and materials derived from recycled resources, in rubber products such as tires. There is also a demand for increasing the ratio of sustainable materials in rubber compositions applied to such rubber products.

However, among the materials compounded in rubber compositions, the use of sustainable materials for silica has not been considered to date.

Accordingly, the present disclosure aims to provide a method for producing a rubber composition that is excellent in low heat generating property and enables the ratio of sustainable materials in rubber products to be improved.

(Solution to Problem)

The gist of the method for producing a rubber composition of the present disclosure for solving the above problem is as follows.

[1] A method for producing a rubber composition containing a rubber component (A) including at least one of natural rubber and synthetic diene-based rubber, a filler including an inorganic filler (B), a silane coupling agent (C), and a silica-silane coupling agent reaction accelerator compound (D), wherein

the inorganic filler (B) includes plant-derived silica (B1), and
the rubber composition is kneaded in a plurality of stages, and in a first stage of kneading, the rubber component (A), all or part of the inorganic filler (B), all or part of the silane coupling agent (C), and the silica-silane coupling

agent reaction accelerator compound (D) are kneaded.

[2] The method for producing a rubber composition according to [1], wherein the silica-silane coupling agent reaction accelerator compound (D) is at least one selected from the group consisting of a guanidine, a thiuram, a dithiocarbamate, a thiourea, a xanthate, a tertiary amine compound, an inorganic salt hydrate, 1,2-benzenediol, an imidazole compound, an organic sulfonic acid, and water.
[3] The method for producing a rubber composition according to [1] or [2], wherein, in the first stage of kneading, an organic acid compound (E) is further kneaded, and a number X of molecules of the organic acid compound (E) in the rubber composition in the first stage has a relationship in formula (1), shown below:

$$0 \leq X \leq 1.5 \times Y \quad \cdots \quad (1)$$

with a number Y of molecules of the silica-silane coupling agent reaction accelerator compound (D).
[4] The method for producing a rubber composition according to any one of [1] to [3], wherein a maximum temperature of the rubber composition in the first stage of kneading is 120°C to 190°C.
[5] The method for producing a rubber composition according to any one of [1] to [4], wherein the inorganic filler (B) accounts for 30 mass% or more of the filler.
[6] The method for producing a rubber composition according to any one of [1] to [5], wherein a number of molecules of the silica-silane coupling agent reaction accelerator compound (D) in the rubber composition in the first stage of kneading is 0.1 times to 1.0 times a number of molecules of the silane coupling agent (C).
[7] The method for producing a rubber composition according to any one of [2] to [6], wherein the guanidine is 1,3-diphenylguanidine.
[8] The method for producing a rubber composition according to any one of [2] to [6], wherein the thiuram is at least one compound selected from tetrakis(2-ethylhexyl)thiuram disulfide and tetrabenzylthiuram disulfide.
[9] The method for producing a rubber composition according to any one of [2] to [6], wherein the thiourea is at least one compound selected from N,N'-diethylthiourea, trimethylthiourea, N,N'-diphenylthiourea, and N,N'-dimethylthiourea.
[10] The method for producing a rubber composition according to any one of [2] to [6], wherein the dithiocarbamate is at least one compound selected from zinc dibenzyldithiocarbamate, zinc N-ethyl-N-phenyldithiocarbamate, zinc dimethyldithiocarbamate, and copper dimethyldithiocarbamate.
[11] The method for producing a rubber composition according to any one of [2] to [6], wherein the xanthate is zinc isopropylxanthate.
[12] The method for producing a rubber composition according to any one of [2] to [6], wherein the tertiary amine compound is represented by general formula (i), shown below:

[Chem. 1]

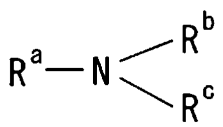

···(i)

where, in general formula (i), $R^a$, $R^b$, and $R^c$ may be the same or different, and each is one selected from a methyl group, an alkyl group having 2 to 36 carbon atoms, an alkenyl group having 8 to 36 carbon atoms, a cyclohexyl group, and a benzyl group.
[13] The method for producing a rubber composition according to any one of [2] to [6], wherein the inorganic salt hydrate is sodium borate hydrate.
[14] The method for producing a rubber composition according to any one of [2] to [6], the imidazole compound is represented by general formula (ii), shown below:

[Chem. 2]

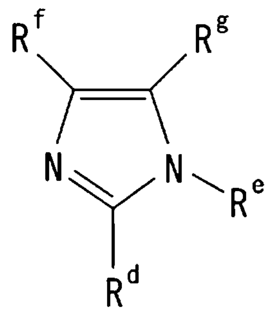

· · · ( ii )

where, in general formula (ii), $R^d$, $R^e$, $R^f$, and $R^g$ may be the same or different, and each is a hydrogen atom or a monovalent organic group, with a proviso that two or more of $R^d$, $R^e$, $R^f$, and $R^g$ may be bonded to form a ring.

[15] The method for producing a rubber composition according to any one of [2] to [6], wherein the organic sulfonic acid is at least one compound selected from p-toluenesulfonic acid and benzenesulfonic acid.

[16] The method for producing a rubber composition according to any one of [3] to [15], wherein stearic acid accounts for 50 mol% or more of the organic acid compound (E) contained in the rubber composition in the first stage of kneading.

[17] The method for producing a rubber composition according to any one of [3] to [16], wherein

the rubber component (A) includes at least one selected from emulsion-polymerized styrene-butadiene copolymer and natural rubber, and

at least one compound selected from rosin acid and fatty acid contained in the at least one selected from emulsion-polymerized styrene-butadiene copolymer and natural rubber accounts for 50 mol% or more of the organic acid compound (E) contained in the rubber composition in the first stage of kneading.

[18] The method for producing a rubber composition according to any one of [1] to [17], wherein, in the first stage of kneading, the silica-silane coupling agent reaction accelerator compound (D) is added and further kneaded after the rubber component (A), all or part of the inorganic filler (B), and all or part of the silane coupling agent (C) have been kneaded.

[19] The method for producing a rubber composition according to any one of [1] to [18], wherein the plant-derived silica (B1) is silica derived from a gramineous plant.

[20] The method for producing a rubber composition according to [19], wherein the plant-derived silica (B1) is silica derived from rice husk.

(Advantageous Effect)

According to the present disclosure, it is possible to provide a method for producing a rubber composition that is excellent in low heat generating property and enables the ratio of sustainable materials in rubber products to be improved.

DETAILED DESCRIPTION

Hereinafter, a method for producing the rubber composition of the present disclosure will be exemplified and described in detail based on its embodiment.

<Definitions>

The compounds described in the present specification may be partially or entirely derived from fossil resources, derived from biological resources such as plant resources, or derived from recycled resources such as used tires. Further, they may be derived from a mixture of any two or more of fossil resources, biological resources, and recycled resources.

In the present specification, the "ratio of sustainable materials" refers to the total mass ratio of materials derived from biological resources (biomass resources) and materials derived from recycled resources in the target rubber composition or rubber product (such as a tire).

In the present specification, the aforementioned biological resources (biomass resources) refer to carbon-neutral organic resources derived from living organisms, and include, for example, those stored in the form of starch or

cellulose, the bodies of animals that grow by eating plants, products obtained by processing plants or animals, and the like, and exclude fossil resources (such as petroleum, coal, and natural gas). The biological resources may be edible or non-edible, but from the viewpoint of not competing with food and effective utilization of resources, it is preferable that they are non-edible.

Specific examples of the biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara (soy pulp), essential oils (pine root oil, orange oil, eucalyptus oil, etc.), black liquor from pulp, algae, and the like. As the biological resources, those processed (i.e., substances derived from biological resources) may also be used. Examples of processing methods include biological processing methods utilizing the action of microorganisms, plants, animals, or their tissue cultures; chemical processing methods utilizing acids, alkalis, catalysts, thermal energy, light energy, and the like; physical processing methods such as micronization, compression, microwave treatment, electromagnetic wave treatment, and the like. Further, as the biological resources, substances extracted or purified from the aforementioned biological resources or processed biological resources (i.e., substances derived from biological resources) may also be used. For example, sugars, proteins, amino acids, fatty acids, fatty acid esters, and the like purified from the aforementioned biological resources may also be used. Examples of the sugars include sucrose, glucose, trehalose, fructose, lactose, galactose, xylose, allose, talose, gulose, altrose, mannose, idose, arabinose, apiose, maltose, cellulose, starch, chitin, and the like, all derived from biological resources. Examples of the proteins include compounds formed by linking amino acids (preferably L-amino acids) derived from biological resources, and oligopeptides such as dipeptides are also included. Examples of the amino acids include valine, leucine, isoleucine, arginine, lysine, asparagine, glutamine, phenylalanine, and the like, all derived from biological resources, among which valine, leucine, isoleucine, arginine, and phenylalanine are preferred. The amino acids may be L-amino acids or D-amino acids, but from the viewpoint of abundance in nature and ease of availability, L-amino acids are preferred. Examples of the fatty acids include butyric acid, palmitic acid, stearic acid, oleic acid, linoleic acid, linolenic acid, and the like, all derived from biological resources. Examples of the fatty acid esters include plant oils, animal oils, and modified products of fats and oils derived from biological resources. Various materials and impurities may be mixed in these biological resources.

In the present specification, the aforementioned recycled resources refer to resources obtained by recycling products that have been used once, collected without being used, or discarded. For example, as recycled resources, resources obtained by recycling used rubber products such as used tires can be mentioned.

<Method for Producing Rubber Composition>

The method for producing a rubber composition according to the present embodiment is a method for producing a rubber composition containing a rubber component (A) comprising at least one of natural rubber and synthetic diene-based rubber, a filler including an inorganic filler (B), a silane coupling agent (C), and a silica-silane coupling agent reaction accelerator compound (D). In the method for producing a rubber composition according to the present embodiment, the inorganic filler (B) includes plant-derived silica (B1), the rubber composition is kneaded in a plurality of stages, and in the first stage of kneading, the rubber component (A), all or part of the inorganic filler (B), all or part of the silane coupling agent (C), and the silica-silane coupling agent reaction accelerator compound (D) are kneaded.

In the method for producing a rubber composition according to the present embodiment, the reason for adding and kneading the silica-silane coupling agent reaction accelerator compound (D) in the first stage of kneading is to enhance the activity of the coupling function of the silane coupling agent (C). By enhancing the activity of the coupling function of the silane coupling agent (C), the low heat generating property of the resulting rubber composition can be improved.

Further, in the method for producing a rubber composition according to the present embodiment, since the plant-derived silica (B1) is a material derived from biological resources (biomass resources), the rubber composition obtained by the method for producing a rubber composition according to the present embodiment has a high ratio of sustainable materials. Therefore, by applying the rubber composition obtained by the method for producing a rubber composition according to the present embodiment to a rubber product, it is possible to improve the ratio of sustainable materials in the rubber product.

Accordingly, according to the method for producing a rubber composition of the present embodiment, it is possible to obtain a rubber composition that is excellent in low heat generating property and improves the ratio of sustainable materials in rubber products.

The maximum temperature of the rubber composition in the first stage of kneading is preferably 120°C to 190°C.

When the maximum temperature of the rubber composition in the first stage of kneading is 120°C to 190°C, the activity of the coupling function of the silane coupling agent (C) can be more suitably enhanced, and the low heat generating property of the resulting rubber composition is further improved.

The kneading step of the rubber composition in the present embodiment includes at least two stages: a first stage of kneading that does not include vulcanizing system agents other than the silica-silane coupling agent reaction accelerator compound (D), and a final stage of kneading that includes vulcanizing system agents, and, if necessary, may include an intermediate stage of kneading that does not include vulcanizing system agents other than the silica-silane coupling agent reaction accelerator compound (D). Here, the vulcanizing system agents refer to agents involved in vulcanization, specifically vulcanizing agents and vulcanization accelerators.

Note that, in the present embodiment, the first stage of kneading refers to the initial stage in which the rubber component (A), the inorganic filler (B), and the silane coupling agent (C) are kneaded, and does not include a stage in which, in the initial stage, the rubber component (A) and fillers other than the inorganic filler (B) are kneaded, or a stage in which only the rubber component (A) is preliminarily kneaded.

In the present embodiment, the kneading stages prior to the final stage, such as the first stage and intermediate stages, are steps in which raw materials other than vulcanizing system agents (vulcanizing agents and vulcanization accelerators), such as the rubber component (A), the inorganic filler (B), and the silane coupling agent (C), are blended and kneaded, and are steps for dispersing the inorganic filler (B) into the rubber composition and reinforcing the rubber component (A). In the present embodiment, by blending the silica-silane coupling agent reaction accelerator compound (D) in the first stage, the dispersion of the inorganic filler (B) into the rubber composition is further improved. Note that, in the intermediate stage, the rubber component and fillers may also be blended and kneaded.

In the method for producing a rubber composition according to the present embodiment, it is preferable that, in the first stage of kneading, after kneading the rubber component (A), all or part of the inorganic filler (B), and all or part of the silane coupling agent (C), the silica-silane coupling agent reaction accelerator compound (D) is added and further kneaded. By adding and further kneading the silica-silane coupling agent reaction accelerator compound (D) after kneading the rubber component (A), all or part of the inorganic filler (B), and all or part of the silane coupling agent (C) in the first stage of kneading, the activity of the coupling function of the silane coupling agent (C) is further enhanced, and the low heat generating property of the resulting rubber composition is further improved.

When an intermediate stage between the first stage of kneading and the final stage is included, the maximum temperature of the rubber composition in the intermediate kneading stage is preferably 120°C to 190°C, more preferably 130°C to 175°C, and even more preferably 140°C to 170°C. The kneading time is preferably 10 seconds to 20 minutes, more preferably 10 seconds to 10 minutes, and even more preferably 30 seconds to 5 minutes. When an intermediate stage is included, it is preferable to lower the temperature of the rubber composition by 10°C or more from the temperature at the end of the first stage of kneading before proceeding to the next stage.

The final stage of kneading refers to the step in which vulcanizing system agents (vulcanizing agents, vulcanization accelerators) are blended and kneaded. The maximum temperature of the rubber composition in this final stage is preferably 60°C to 140°C, more preferably 80°C to 120°C, and even more preferably 100°C to 120°C. The kneading time is preferably 10 seconds to 20 minutes, more preferably 10 seconds to 10 minutes, and even more preferably 20 seconds to 5 minutes. When proceeding from the first stage or intermediate stage to the final stage of kneading, it is preferable to lower the temperature of the rubber composition by 10°C or more from the temperature at the end of the first stage of kneading before proceeding to the next stage.

In the method for producing a rubber composition according to the present embodiment, various compounding agents such as vulcanization activators like zinc white, antioxidants, and the like, which are usually blended in the rubber composition, may be kneaded in the first stage, the final stage, or the intermediate stage between the first and final stages, as necessary.

As the kneading apparatus in the method for producing a rubber composition according to the present embodiment, a Banbury mixer, roll, intensive mixer, kneader, twin screw extruder, or the like can be used. There are no particular limitations on the kneading conditions, and various conditions such as the input volume of the kneading apparatus, the rotational speed of the rotor, ram pressure, and the type of kneading apparatus can be appropriately selected according to the purpose.

The method for producing a rubber composition according to the present embodiment is not particularly limited, but in addition to the above-described kneading, it may include steps such as warming and extrusion. Further, by vulcanizing the obtained rubber composition, a vulcanized rubber can be obtained.

There are no particular limitations on the conditions for the warming step, and various conditions such as the warming temperature, warming time, and warming apparatus can be appropriately selected according to the purpose. As the warming apparatus, a warming roll machine or the like, which is usually used for warming rubber compositions, can be mentioned.

There are no particular limitations on the conditions for the extrusion step, and various conditions such as extrusion time, extrusion speed, extrusion apparatus, and extrusion temperature can be appropriately selected according

to the purpose. As the extrusion apparatus, an extruder or the like, which is usually used for extruding rubber compositions, can be mentioned. The extrusion temperature can be appropriately determined.

There are no particular limitations on the apparatus, method, or conditions for vulcanization, and they can be appropriately selected according to the purpose. As the apparatus for vulcanization, a molding vulcanizer using a mold, which is usually used for vulcanizing rubber compositions, can be mentioned. As for the vulcanization conditions, the temperature is, for example, about 100°C to 190°C.

(Rubber Component (A))

The rubber composition obtained by the method for producing a rubber composition according to the present embodiment contains a rubber component (A) comprising at least one of natural rubber and synthetic diene-based rubber, and the rubber component (A) imparts rubber elasticity to the composition. The rubber component (A) preferably has a sustainable ratio of 30 mass% or more, more preferably 40 mass% or more, even more preferably 50 mass% or more, still more preferably 60 mass% or more, yet more preferably 70 mass% or more, even more preferably 80 mass% or more, still more preferably 90 mass% or more, and particularly preferably 100 mass%.

Here, the "sustainable ratio" of the rubber component (A) refers to the total mass ratio of components derived from biological resources (biomass resources) and components derived from recycled resources in the rubber component (A).

As the rubber component (A), rubber derived from biological resources and rubber derived from recycled resources are preferred.

Here, the proportion of monomer components derived from biological resources in 100 mol% of the monomer components constituting the rubber derived from biological resources is preferably 50 mol% or more, more preferably 70 mol% or more, even more preferably 80 mol% or more, still more preferably 90 mol% or more, particularly preferably 95 mol% or more, and may be 100 mol%.

Further, the proportion of monomer components derived from recycled resources in 100 mol% of the monomer components constituting the rubber derived from recycled resources is preferably 50 mol% or more, more preferably 70 mol% or more, even more preferably 80 mol% or more, still more preferably 90 mol% or more, particularly preferably 95 mol% or more, and may be 100 mol%.

The rubber component (A) is a component that contributes to crosslinking, and usually has a weight-average molecular weight (Mw) of 10,000 or more, preferably 50,000 or more, more preferably 150,000 or more, even more preferably 200,000 or more, and also preferably 5,000,000 or less, more preferably 2,000,000 or less, even more preferably 1,500,000 or less, and still more preferably 1,300,000 or less.

Note that, in the present specification, the weight-average molecular weight (Mw) of the rubber component (A) can be determined, for example, by conversion to standard polystyrene based on the measured value by gel permeation chromatography (GPC) (GPC-8000 series manufactured by Tosoh Corporation, detector: differential refractometer, column: TSKGEL SUPERMULTIPORE HZ-M manufactured by Tosoh Corporation).

As the rubber component (A), diene-based rubber is preferred, and as the diene-based rubber, isoprene-based rubber and butadiene-based rubber are preferred. Here, isoprene-based rubber refers to rubber containing units derived from isoprene as monomer units, and butadiene-based rubber refers to rubber containing units derived from butadiene as monomer units.

Examples of the isoprene-based rubber include natural rubber (NR), synthetic isoprene rubber (IR), upgraded natural rubber (upgraded NR), modified natural rubber (modified NR), and modified synthetic isoprene rubber (modified IR). As the natural rubber (NR), for example, RSS #3, TSR20 (for example, SIR20 or STR20), and the like, which are commonly used in the tire industry, can be used. The origin of the natural rubber (NR) is not particularly limited, and examples include those derived from the Para rubber tree, guayule, Russian dandelion, and the like. As the synthetic isoprene rubber (IR), there is no particular limitation, and for example, IR2200 and the like, which are commonly used in the tire industry, can be used. Examples of the upgraded NR include deproteinized natural rubber (DPNR), high-purity natural rubber (UPNR), and the like. Examples of the modified NR include epoxidized natural rubber (ENR), hydrogenated natural rubber (HNR), grafted natural rubber, and the like. Examples of the modified IR include epoxidized synthetic isoprene rubber, hydrogenated synthetic isoprene rubber, grafted synthetic isoprene rubber, and the like. These isoprene-based rubbers may be used alone or in combination of two or more. Among these, NR is preferred as the isoprene-based rubber.

The isoprene-based rubber preferably has a sustainable ratio of 30 mass% or more, more preferably 40 mass% or more, even more preferably 50 mass% or more, still more preferably 60 mass% or more, yet more preferably 70 mass% or more, even more preferably 80 mass% or more, still more preferably 90 mass% or more, and particularly preferably 100 mass%.

In order to set the sustainable ratio of the isoprene-based rubber within the above range, it is preferable to use natural rubber (NR), or to use a polymer synthesized using isoprene derived from biological resources or isoprene derived from recycled resources as the monomer component. In this case, the synthesized polymer may be a homopolymer of a

monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

Examples of the butadiene-based rubber include butadiene rubber (BR), aromatic vinyl compound-butadiene copolymer rubber (for example, styrene-butadiene rubber (SBR)), and the like. Here, it is preferable that the butadiene serving as the raw material for the butadiene-based rubber is derived from a biological resource or a recycled resource.

Examples of the butadiene rubber (BR) include, for example, high-cis content butadiene rubber, low-cis content butadiene rubber, and butadiene rubber containing syndiotactic polybutadiene crystals. Commercial products can be used as the butadiene rubber (BR), and examples of such commercial products include those manufactured by UBE Elastomer Co., Ltd., ENEOS Materials Corporation, Asahi Kasei Corporation, Zeon Corporation, and the like. These butadiene rubbers may be used alone or in combination of two or more kinds.

Examples of the aromatic vinyl compound-butadiene copolymer rubber (for example, SBR) include, for example, emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinylnaphthalene, divinylnaphthalene, and the like. These aromatic vinyl compounds may be used alone or in combination of two or more kinds. Among these, styrene is preferable, and styrene derived from a biological resource and styrene derived from a recycled resource are particularly preferable. That is, SBR is preferable as the aromatic vinyl compound-butadiene copolymer rubber. Note that the styrene may have a substituent. Commercial products can be used as the aromatic vinyl compound-butadiene copolymer rubber, and examples of such commercial products include those manufactured by Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more kinds.

It is preferable that the sustainable ratio of the butadiene-based rubber is 30 mass% or more, more preferably 40 mass% or more, even more preferably 50 mass% or more, still more preferably 60 mass% or more, yet more preferably 70 mass% or more, further preferably 80 mass% or more, even further preferably 90 mass% or more, and particularly preferably 100 mass%.

In order to set the sustainable ratio of the butadiene-based rubber within the above range, for example, a polymer synthesized using butadiene derived from a biological resource, butadiene derived from a recycled resource, an aromatic vinyl compound derived from a biological resource (for example, styrene derived from a biological resource), or an aromatic vinyl compound derived from a recycled resource (for example, styrene derived from a recycled resource) as a monomer component may be used. In this case, the synthesized polymer may be a homopolymer of a monomer derived from a biological resource, a homopolymer of a monomer derived from a recycled resource, a copolymer of a monomer derived from a biological resource and a monomer derived from a recycled resource, or a copolymer of a monomer derived from a biological resource and/or a monomer derived from a recycled resource and a monomer derived from a fossil resource (such as petroleum). Note that the butadiene rubber (B-BR) derived from a biological resource (biomass resource) and the aromatic vinyl compound-butadiene copolymer rubber derived from a biological resource (for example, styrene-butadiene rubber (B-SBR) derived from a biological resource (biomass resource)) include not only rubber obtained by polymerizing butadiene and the like according to conventional methods, but also rubber obtained by reactions or enzymatic reactions using microorganisms, plants, animals, and tissue cultures thereof (hereinafter also referred to as "microorganisms, etc.").

In order to set the sustainable ratio of the entire rubber component (A) within the above range, it is preferable to use natural rubber (NR) as the rubber component (A), or to use a polymer synthesized using a monomer component derived from a biological resource or a monomer component derived from a recycled resource as a monomer component.

Generally, materials (rubber and its monomers, fillers, resins, etc.) for rubber compositions for tires require large-scale manufacturing equipment for their production, and are usually produced in large factories in specific regions, requiring a great deal of energy for storage and transportation of raw materials and products. In contrast, materials derived from biological resources (biomass resources) originate from agricultural products, forests, etc. in each region, and can also be produced on a small scale by fermentation of microorganisms or catalytic reactions, so by utilizing local products or waste, the energy required for transportation and storage of raw materials can be reduced, and furthermore, the energy required for transportation and storage of the manufactured materials to the tire factory can also be reduced, making it environmentally friendly. In addition, materials derived from recycled resources can be obtained, for example, by dismantling and pyrolyzing used tires to extract materials constituting the tire, such as rubber, fillers, steel cords, and the like. Furthermore, sulfur can be obtained from biological resources or processed products of biological resources by a method including a desulfurization step for removing sulfur-containing substances from the biological resource or processed product thereof, a recovery step for recovering sulfur from the desulfurization treatment residue generated in the desulfurization step, and a processing step for processing the recovered sulfur into sulfur for vulcanization (for

example, the method described in Japanese Patent Application No. 2022-140390), and materials for rubber compositions for tires can be obtained from various wastes and used articles. In this way, by using sustainable materials (materials derived from biological resources or materials derived from recycled resources), it is possible to comprehensively reduce the environmental load in tire manufacturing, such as reduction of carbon dioxide emissions over the entire life cycle (LCCO2), reduction of energy consumption over the entire life cycle (LCE), reduction of costs generated over the entire life cycle (LCC), and reduction of fossil resource usage.

Further, when manufacturing the rubber composition, the ratio of monomer components derived from biological resources, monomer components derived from recycled resources, and monomer components derived from fossil resources may be appropriately selected according to the supply situation of biological resources, recycled resources, and fossil resources (for example, monomer components derived from fossil resources) and/or market demands for these resources (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or materials derived from recycled resources) having performance equivalent to that of conventional synthetic rubber. Note that, when using monomer components derived from recycled resources, it may be difficult to separate them from monomer components derived from fossil resources due to reasons in the manufacturing process of the monomer. In such cases, the environmental impact can be evaluated by adopting the concept of mass balance.

The ratio of each monomer unit (for example, units derived from isoprene, units derived from butadiene, units derived from aromatic vinyl compounds) in the entire rubber component (A) can be appropriately adjusted according to the member to which it is applied. The ratio of each monomer unit in the entire rubber component can be adjusted, for example, by appropriately combining the above-described isoprene-based rubber and butadiene-based rubber. In addition, the ratio of cis-bond units among the units derived from butadiene can also be appropriately adjusted according to the member to which it is applied.

In the present specification, "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from an aromatic vinyl compound" means a structural unit in a polymer constructed based on an aromatic vinyl compound as a monomer.

In the present specification, the ratio of each monomer unit is measured by NMR.

The rubber component (A) may include, in addition to the above-described isoprene-based rubber, butadiene rubber (BR), and aromatic vinyl compound-butadiene copolymer rubber (for example, SBR), synthetic diene-based rubbers such as acrylonitrile-butadiene rubber (NBR), chloroprene rubber (CR), butyl rubber (IIR), styreneisoprene-butadiene copolymer rubber (SIBR), and ethylenepropylene-diene terpolymer rubber (EPDM). These rubber components may be used alone or in combination of two or more kinds.

The rubber component (A) may be modified to introduce functional groups that interact with fillers such as carbon black and silica. Examples of such functional groups include amino groups, amide groups, isocyanate groups, imino groups, imidazole groups, urea groups, ammonium groups, imide groups, hydrazo groups, azo groups, diazo groups, carboxyl groups, nitrile groups, pyridyl groups, alkoxy groups, hydroxyl groups, oxy groups, epoxy groups, ether groups, carbonyl groups, oxycarbonyl groups, silyl groups, alkoxy silyl groups, mercapto groups, sulfide groups, disulfide groups, sulfonyl groups, sulfinyl groups, thiocarbonyl groups, and the like, and these functional groups may have substituents. These functional groups may be introduced into the rubber component alone or in combination of two or more kinds. Among these, amino groups, alkoxy groups, and alkoxy silyl groups are preferable, and substituted amino groups in which a hydrogen atom of the amino group is substituted with an alkyl group having 1 to 6 carbon atoms, alkoxy groups having 1 to 6 carbon atoms, and alkoxy silyl groups having 1 to 6 carbon atoms are more preferable.

The functional group may be introduced, for example, by reacting a compound (modifier) having the functional group with the rubber component (A). The functional group is a modifying functional group having interaction with fillers such as silica and carbon black, and examples include nitrogen-containing functional groups, silicon-containing functional groups, and oxygen-containing functional groups. Examples of compounds (modifiers) having a nitrogen-containing functional group include amino group-containing compounds, and the like; examples of compounds (modifiers) having a silicon-containing functional group include silicon halides, hydrocarbyloxy silane compounds, and the like; and examples of compounds (modifiers) having an oxygen-containing functional group include alkoxy group-containing compounds, alkylene oxide group-containing compounds, trialkylsilyloxy group-containing compounds, and the like. More specifically, compounds described in International Publication No. 2016/194316, International Publication No. 2019/117256, and the like can be mentioned. These modifiers may be used alone or in combination of two or more kinds.

The rubber derived from sustainable materials (materials derived from biological resources or materials derived from recycled resources) can be produced, for example, by using monomer components derived from biological resources or monomer components derived from recycled resources, and, if necessary, monomer components derived from fossil resources, in the same manner as the conventional method for producing synthetic rubber derived from fossil resources.

Further, the rubber derived from sustainable materials (particularly, rubber derived from biological resources) can also be obtained by reactions or enzymatic reactions using microorganisms, etc.

As a method for preparing rubber derived from biological resources from the above-described biological resources, for example, the method described in JP 2022-179158 A can be used. For example, by using butadiene obtained from biological resources as a monomer component, butadiene rubber (B-BR) derived from biological resources (biomass resources) can be obtained, and by using styrene obtained from biological resources and butadiene obtained from biological resources as monomer components, styrene-butadiene rubber (B-SBR) derived from biological resources (biomass resources) can be obtained. Here, as methods for obtaining B-BR and B-SBR from biological resources, in addition to artificial polymerization methods, methods of polymerization in vivo, methods of polymerization using bio-derived enzymes, and the like can be mentioned. The molecular weight, branching, microstructure, and the like of the obtained B-BR and B-SBR can be appropriately adjusted by changing the polymerization conditions according to known methods in accordance with the desired tire performance.

As the butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more kinds.

As the styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), and styrene obtained from microorganisms (preferably microorganisms belonging to the genus Penicillium or Escherichia, more preferably P. citrinum or transformed E. coli) can be suitably used. These styrenes may also be used in combination of two or more kinds.

Recently, biomass complexes centered on bioethanol and bioethylene are being planned, but bioethanol and bioethylene are produced mainly using saccharides and/or cellulose as biological resources, and cannot effectively utilize other biological resources such as proteins, lipids, amino acids, and the like. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components for use. In this way, it is possible to effectively utilize a wide range of biological resources such as sugars, proteins, and lipids, as well as recycled resources, without relying on a single type of biological resource, to stably supply rubber derived from sustainable materials, and furthermore, to take environmental considerations into account according to the situation at the time of production.

When using a plurality of types of monomer components derived from biological resources, it is preferable to use monomer components derived from different biological resources, that is, monomer components obtained from different biological resources. Specifically, as the butadiene derived from biological resources, it is preferable to use a mixture of a plurality of types of butadiene derived from biological resources having different origins, and/or as the styrene derived from biological resources, it is preferable to use a mixture of a plurality of types of styrene derived from biological resources having different origins. In this way, a plurality of types of biological resources can be effectively utilized.

(Filler)

The rubber composition obtained by the method for producing a rubber composition of the present embodiment contains a filler including an inorganic filler (B). By including a filler, the reinforcing property of the rubber composition is improved.

The content of the filler is preferably in the range of 20 to 150 parts by mass per 100 parts by mass of the rubber component (A). If it is 20 parts by mass or more, it is preferable from the viewpoint of improving the reinforcing property of the rubber composition, and if it is 150 parts by mass or less, it is preferable from the viewpoint of reducing rolling resistance.

Among the filler, it is preferable that the inorganic filler (B) accounts for 30 mass% or more. When the proportion of the inorganic filler (B) in the filler is 30 mass% or more, both wet performance and low heat generating property can be achieved. From the viewpoint of wet performance and low heat generating property, the proportion of the inorganic filler (B) in the filler is more preferably 40 mass% or more, and even more preferably 70 mass% or more.

As the inorganic filler (B), silica and an inorganic compound represented by the following general formula (iii) can be used.

$dM \cdot xSiO_y \cdot zH_2O \cdots$ (iii)

In the above general formula (iii), M is at least one selected from the group consisting of metals selected from aluminum, magnesium, titanium, calcium, and zirconium, oxides or hydroxides of these metals, hydrates thereof, or carbonates of these metals; d, x, y, and z are an integer of 1 to 5, an integer of 0 to 10, an integer of 2 to 5, and an integer of 0 to 10, respectively.

Note that, in general formula (iii), when both x and z are 0, the inorganic compound is at least one metal selected from aluminum, magnesium, titanium, calcium, and zirconium, a metal oxide, or a metal hydroxide.

Examples of the inorganic compounds represented by the above general formula (iii) include alumina ($Al_2O_3$) such as γ-alumina and α-alumina; alumina monohydrates ($Al_2O_3 \cdot H_2O$) such as boehmite and diaspore; aluminum hydroxides [$Al(OH)_3$] such as gibbsite and bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], magnesium-aluminum oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2SiO_4$, etc.), calcium aluminum silicate ($Al_2O_3 \cdot CaO \cdot 2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], and crystalline aluminosilicate salts containing hydrogen, alkali metal, or alkaline earth metal to compensate for charge, such as various zeolites. Further, it is preferable that M in the above general formula (iii) is at least one selected from aluminum metal, aluminum oxide or hydroxide, and their hydrates, or aluminum carbonate. The inorganic compounds represented by the above general formula (iii) may be used alone or in combination of two or more. The average particle diameter of these inorganic compounds is preferably in the range of 0.01 to 10 μm, more preferably in the range of 0.05 to 5 μm, from the viewpoint of balancing kneading operability, wear resistance, and wet grip performance.

Among the above inorganic fillers (B), silica is preferable from the viewpoint of achieving both low heat generating property and wear resistance. The inorganic filler (B) may be used as silica alone, or as a combination of silica and one or more inorganic compounds represented by general formula (iii).

It is preferable that the inorganic filler (B) is used in an amount of 20 to 120 parts by mass per 100 parts by mass of the rubber component (A). An amount of 20 parts by mass or more is preferable from the viewpoint of ensuring wet performance, and an amount of 120 parts by mass or less is preferable from the viewpoint of low heat generating property. Furthermore, an amount of 30 to 100 parts by mass is more preferable. When silica is used as the inorganic filler (B), it is preferable that silica accounts for 30 mass% or more of the filler, and more preferably 35 mass% or more.

-Silica-

The inorganic filler (B) contains plant-derived silica (B1). Since the plant-derived silica (B1) is a material derived from biological resources (biomass resources), including plant-derived silica (B1) increases the ratio of sustainable materials in the rubber composition, and by applying the rubber composition to a rubber product, the ratio of sustainable materials in the rubber product can be increased, thereby reducing environmental impact.

As the plant-derived silica (B1), silica derived from siliceous plants is preferable from the viewpoint of reducing environmental impact. Such siliceous plants are present, for example, in bryophytes, ferns, horsetails, Cucurbitaceae, Urticaceae, and Gramineae plants. Among these plants, Gramineae plants are preferable, that is, as the plant-derived silica (B1), silica derived from Gramineae plants is preferable. Silica derived from Gramineae plants can be locally procured near tire manufacturing plants, thereby reducing energy and cost for transportation and storage, and is preferable from various environmental perspectives.

Examples of such Gramineae plants include rice, bamboo, and sugarcane, among which rice is preferable. Since rice is widely cultivated for food, it can be locally procured in a wide area, and rice husks are generated in large quantities as industrial waste, making it easy to secure the amount. Therefore, from the viewpoint of ease of procurement, silica derived from rice husk (hereinafter also referred to as "rice husk silica") is particularly preferable as the plant-derived silica (B1). By using rice husk silica, rice husks, which are industrial waste, can be effectively utilized, and since raw materials can be locally procured near tire manufacturing plants, energy and cost for transportation and storage can be reduced, which is preferable from various environmental perspectives. The rice husk silica may be a powder of rice husk charcoal obtained by carbonizing rice husk by heating, or may be precipitated silica produced by preparing an alkali silicate aqueous solution by extracting rice husk ash generated when rice husk is combusted as fuel in a biomass boiler with alkali, and producing by a wet process using the alkali silicate aqueous solution. The method for producing the rice husk charcoal is not particularly limited, and various known methods can be used. For example, rice husk charcoal can be obtained by thermally decomposing rice husk by steaming it in a kiln. The rice husk charcoal thus obtained can be pulverized using a known pulverizer (for example, a ball mill), and classified and sorted into a predetermined particle size range to obtain a powder of rice husk charcoal. The precipitated silica derived from rice husk can be produced by the method described in JP

2019-38728 A or the like.

The ratio of the plant-derived silica (B1) in the inorganic filler (B) is preferably 5 mass% or more, more preferably 10 mass% or more, still more preferably 25 mass% or more, even more preferably 45 mass% or more, and most preferably 100 mass%. By setting the ratio of the plant-derived silica (B1) in the inorganic filler (B) to 5 mass% or more, the ratio of sustainable materials in the rubber composition is increased, and by applying the rubber composition to a rubber product, the ratio of sustainable materials in the rubber product can be further increased.

The inorganic filler (B) may contain silica other than the above plant-derived silica (B1). Examples of such silica include wet silica (hydrous silicate), dry silica (anhydrous silicate), calcium silicate, and aluminum silicate, among which wet silica is preferable due to its high content of silanol groups. These silicas other than the plant-derived silica (B1) may be used alone or in combination of two or more. As the silica other than the plant-derived silica (B1), commercially available products can be used, and examples of such commercially available silica products include those from Tosoh Silica Corporation, Evonik, Solvay, Solvay Japan Co., Ltd., Tokuyama Corporation, and the like.

Further, from the viewpoint of reducing environmental impact, it is also preferable to use silica produced by recycling, such as by extracting silicate components from silicon wafer scraps used as raw materials for semiconductors or from glass bottles and the like.

The plant-derived silica (B1) preferably has a nitrogen adsorption specific surface area ($N_2SA$) of 50 $m^2/g$ or more, more preferably 100 $m^2/g$ or more, still more preferably 150 $m^2/g$ or more, and also preferably 350 $m^2/g$ or less, more preferably 250 $m^2/g$ or less, still more preferably 230 $m^2/g$ or less, and even more preferably 200 $m^2/g$ or less.

In the present specification, the nitrogen adsorption specific surface area ($N_2SA$) of silica is a value measured by the BET method in accordance with ASTM D3037-93.

The content of the plant-derived silica (B1) can be appropriately adjusted depending on, for example, the tire category to which it is applied, the tire member, target performance, and the like. For example, the content of the plant-derived silica (B1) is preferably 5 parts by mass or more, more preferably 10 parts by mass or more, still more preferably 30 parts by mass or more, even more preferably 50 parts by mass or more, still more preferably 70 parts by mass or more, further preferably 80 parts by mass or more, even more preferably 100 parts by mass or more, and particularly preferably 110 parts by mass or more, per 100 parts by mass of the rubber component (A). The upper limit is preferably 300 parts by mass or less, more preferably 200 parts by mass or less, still more preferably 180 parts by mass or less, and particularly preferably 150 parts by mass or less.

-Carbon Black-

The filler may contain carbon black in addition to the above inorganic filler (B). The carbon black can reinforce the rubber composition and improve the wear resistance of the rubber composition. As the carbon black, plant-derived carbon black and carbon black obtained by recycling ("recovered carbon black" or "recycled carbon black") are preferable. Here, examples of plant-derived carbon black include those derived from castor oil and tall oil. Recovered carbon black will be described in detail below.

The content of carbon black (the total of recovered carbon black and carbon black other than recovered carbon black) in the rubber composition is preferably 1 part by mass or more, more preferably 3 parts by mass or more, and still more preferably 5 parts by mass or more, per 100 parts by mass of the rubber component (A), from the viewpoint of further improving the wear resistance of the rubber composition and the tire to which it is applied. From the viewpoint of operability of the rubber composition, the content of carbon black in the rubber composition is preferably 100 parts by mass or less, more preferably 80 parts by mass or less, and still more preferably 70 parts by mass or less, per 100 parts by mass of the rubber component (A).

-Recovered Carbon Black-

In the present specification, "recovered carbon black" refers to carbon black obtained by recovering from raw materials that are waste subjected to recycling. Examples of the waste include waste rubber, used tires, and waste oil. Waste rubber refers to all discarded rubber, not limited to that generated from rubber products, but also including unnecessary scraps generated during production or repair of rubber products. Examples of scraps include buffing dust and peeling rubber. Buffing dust is, for example, fine rubber generated in the buffing process of retreading tires, in which the tread portion remaining on the base tire is shaved. Peeling rubber is, for example, long rubber strips of 1 to 2 cm width peeled from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires and rubber hoses, as well as rubber parts or components in the manufacturing stage of final products. Used tires may be those subjected to retreading, or may be waste tires generated by tire replacement, vehicle scrapping, or the like, as well as ELT (End-of-Life Tire) that have reached the end of their service life as tires, or any tires discarded for any reason. Waste oil is not limited to

that generated by decomposing plastics or rubber, but also includes used oils discharged from industry, such as animal and vegetable oils, lubrication oil, insulating oil, and cutting oil. Among these, as waste oil, those not containing compositions other than organic substances, such as those derived from silicone rubber or polyvinyl chloride, are preferable. Also, as waste oil, those in which carbon black or rubber containing carbon black is mixed are preferable.

"Recovered carbon black" is different from carbon black directly produced from hydrocarbons such as petroleum, natural gas, or coal, that is, carbon black that is not a recycled product. Note that "used" here includes not only those actually used and then discarded, but also those manufactured but not actually used and then discarded.

Further, it is preferable that the recovered carbon black is obtained by thermal decomposition of vulcanized rubber products containing carbon black. Recovered carbon black obtained by thermal decomposition of vulcanized rubber products containing carbon black is easily available because there are large quantities of vulcanized rubber products containing carbon black and it can be easily obtained by thermal decomposition. Furthermore, it is preferable that the recovered carbon black is obtained from the solid residue generated by thermal decomposition of the vulcanized rubber products containing carbon black. When rubber products containing carbon black are thermally decomposed, solid residue and volatile components (oil) are obtained, and recovered carbon black can be recovered from either.

When recovering carbon black from the volatile components, oil components having a specific gravity suitable for producing carbon black are recovered, and carbon black can be produced using existing carbon black production methods (for example, JP 2015-520259 A). In this case, unlike carbon black recovered from solid residue, there are advantages such as no impurities and no mixing of different grades. In addition, in the production of low environmental impact carbon black, there are various options such as using, in addition to oil obtained by recovering volatile components obtained by the above-mentioned thermal decomposition of rubber, vegetable oil, oil derived from waste plastics, and the like. However, edible resources such as vegetable oil have issues in securing sufficient quantities due to demand for other uses such as food, and the environmental impact associated with expansion of cultivated land must also be considered. Also, oil derived from waste plastics and the like is used for other purposes such as horizontal recycling of plastics, so supply issues are also considered. On the other hand, when using volatile components (oil) generated by thermal decomposition of vulcanized rubber products, especially tires, it is possible to continue using existing materials within the tire industry, thereby reducing the consumption of new materials in new tire production and contributing to the reduction of environmental impact as an industry. The grade of the carbon black is not particularly limited, and examples include N134, N110, N220, N234, N219, N339, N330, N326, N351, N550, N762, and the like.

The solid residue obtained by thermally decomposing waste such as used rubber and used tires contains ash in addition to carbon black. The ash is derived from non-volatile components contained in rubber or tires. Therefore, the recovered carbon black obtained from the solid residue has a relatively low content of carbon black. On the other hand, considering the various physical properties required for tires produced using recovered carbon black, the carbon content in the recovered carbon black is preferably as high as possible. The carbon content in the recovered carbon black is preferably 80 mass% or more, more preferably 85 mass% or more, still more preferably 87 mass% or more, and particularly preferably 89 mass% or more. The carbon content in the recovered carbon black is preferably 97 mass% or less. Note that the carbon content is a value excluding adsorbed moisture.

The ash specifically includes zinc oxide, zinc sulfide, silica, iron compounds (iron oxide), calcium oxide, aluminum oxide, magnesium oxide, and the like. In the case of recovered carbon black produced from solid residue obtained by thermally decomposing waste, even if various processes for removing ash are performed, a certain amount of ash remains. In the present embodiment, the presence of ash in the recovered carbon black is permitted. In one embodiment, the lower limit of the ash content in the recovered carbon black may be 0.5 mass%.

The recovered carbon black can also be obtained from the thermal decomposition process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at a relatively low temperature (paragraph [0027]). The carbon black obtained from such a thermal decomposition process is, as mentioned in paragraph [0004] of JP 6856781 B, usually lacking functional groups on its surface (see "Comparison of surface morphology and chemistry of pyrolytic carbon black and commercial carbon black," Powder Technology 160 (2005) 190-193).

The recovered carbon black may lack functional groups on its surface, or may be treated to include functional groups on its surface. The treatment to include functional groups on the surface of recovered carbon black can be carried out by conventional methods. For example, European Patent Application Publication No. 3173251 describes obtaining carbon black containing hydroxyl groups and/or carboxyl groups on its surface by treating carbon black obtained from a thermal decomposition process with potassium permanganate under acidic conditions. Also, JP 6856781 B describes obtaining activated carbon black by treating carbon black obtained from a thermal decomposition process with an amino acid compound containing at least one thiol group or disulfide group to activate its surface. The recovered carbon black according to the present embodiment also encompasses such carbon black treated to include functional groups on its surface.

As the thermal decomposition of crosslinked rubber products (vulcanized rubber products) such as used tires, for

example, a thermal decomposition method at a temperature of 650°C or higher can be used.

Regarding the crosslinked rubber product used for the aforementioned decomposition, it may be grouped in advance according to the type of rubber component blended, and then the decomposition process may be performed for each group. Alternatively, it may be grouped in advance according to the type of filler blended (for example, the type of carbon black, the type of silica, the mixing ratio of carbon black and silica, etc.), and then the decomposition process may be performed for each group. Furthermore, both grouping by type of rubber component and grouping by type of filler may be performed, and then the decomposition process may be performed for each group. When the decomposition process is performed for each group in this manner, recovered carbon black having more uniform physical properties can be obtained, and when it is blended again into a rubber component, a rubber composition with better performance can be obtained.

In addition, when the crosslinked rubber product used for the aforementioned decomposition is derived from a tire, it may be grouped in advance by tire type (for example, for passenger vehicles, for trucks and buses, for large vehicles such as off-road vehicles, for aircraft, for agricultural vehicles, etc.), and then the decomposition process may be performed for each group. Alternatively, it may be grouped in advance by tire component (for example, tread rubber, sidewall rubber, bead portion rubber, steel cord coating rubber, organic fiber coating rubber, pad rubber, cushion rubber, etc.), and then the decomposition process may be performed for each group. Furthermore, both grouping by tire type and grouping by tire component may be performed, and then the decomposition process may be performed for each group. When the decomposition process is performed for each group in this manner, recovered carbon black having more uniform physical properties can be obtained, and when it is blended again into a rubber component, a rubber composition with better performance can be obtained.

The recovered carbon black preferably has a nitrogen adsorption specific surface area by the BET method of 40 to 100 $m^2/g$, more preferably 50 to 90 $m^2/g$, and particularly preferably 55 to 75 $m^2/g$.

Here, in the present specification, the nitrogen adsorption specific surface area by the BET method of the recovered carbon black is the statistical thickness specific surface area (STSA), and is determined in accordance with ASTM D6556.

The recovered carbon black preferably has a pH of 4 to 12, more preferably 5 to 11, and particularly preferably 6 to 10.

Here, in the present specification, the pH of the recovered carbon black is determined in accordance with ASTM D1512.

The recovered carbon black preferably has a toluene discoloration transmittance of 60% or more, more preferably 70% or more, and particularly preferably 80% or more.

Here, in the present specification, the toluene discoloration transmittance of the recovered carbon black is determined in accordance with ASTM D1618.

The recovered carbon black preferably has a heating loss at 125°C of 3 mass% or less, more preferably 2.5 mass% or less, and particularly preferably 2 mass% or less.

Here, in the present specification, the heating loss at 125°C of the recovered carbon black is determined in accordance with ASTM D1509.

The recovered carbon black preferably has a sulfur content of 5 mass% or less, more preferably 3.5 mass% or less, and particularly preferably 3 mass% or less.

The recovered carbon black preferably has a 35 mesh sieve residue of 20 mass ppm or less, more preferably 15 mass ppm or less, and particularly preferably 10 mass ppm or less.

Here, in the present specification, the 35 mesh sieve residue of the recovered carbon black is determined in accordance with ASTM D1514.

The recovered carbon black preferably has a 325 mesh (44 $\mu$m) sieve residue of 1000 mass ppm or less, more preferably 700 mass ppm or less, and particularly preferably 300 mass ppm or less.

Here, in the present specification, the 325 mesh (44 $\mu$m) sieve residue of the recovered carbon black is determined in accordance with ASTM D1514.

The recovered carbon black preferably has a pellet hardness of 100 cN or less, more preferably 90 cN or less, and particularly preferably 80 cN or less.

Here, in the present specification, the pellet hardness of the recovered carbon black is determined in accordance with ASTM D5230.

The recovered carbon black preferably has a pellet fines content of 10 mass% or less, more preferably 7 mass% or less, and particularly preferably 5 mass% or less.

Here, in the present specification, the pellet fines content of the recovered carbon black is determined in accordance with ASTM D1508.

The recovered carbon black preferably has a particle size (D97) of 25 $\mu$m or less, more preferably 15 $\mu$m or less, and particularly preferably 10 $\mu$m or less.

Here, in the present specification, the particle size (D97) of the recovered carbon black is determined using a

laser diffraction particle size distribution meter, with a refractive index of 1.33 for water and 1.75 for the filler.

The recovered carbon black preferably has a proportion of particles of 5 μm or less of 50 vol% or more, more preferably 70 vol% or more, and particularly preferably 80 vol% or more.

The recovered carbon black preferably has an ash content of 25 mass% or less, more preferably 20 mass% or less, and particularly preferably 15 mass% or less. When the ash content of the recovered carbon black is 25 mass% or less, the various physical properties of rubber products to which the rubber composition is applied can be improved.

Here, in the present specification, the ash content of the recovered carbon black is determined in accordance with ASTM D8474 and D1506.

The recovered carbon black preferably has a dibutyl phthalate (DBP) absorption of 70 to 120 mL/100 g, more preferably 75 to 110 mL/100 g, and particularly preferably 80 to 100 mL/100 g.

Here, in the present specification, the DBP absorption of the recovered carbon black is determined in accordance with ASTM D2414.

The recovered carbon black preferably has a compressed dibutyl phthalate (24M4DBP) absorption of 50 to 110 mL/100 g, more preferably 60 to 100 mL/100 g, and particularly preferably 70 to 90 mL/100 g.

Here, in the present specification, the 24M4DBP absorption of the recovered carbon black is determined in accordance with ASTM D3493.

As the recovered carbon black, a commercially available product can be used. As such a commercially available product, for example, the product name "PB365" manufactured by Enrestec Co., Ltd. can be mentioned. PB365 is a recovered carbon black produced through thermal decomposition of used tires, has a nitrogen adsorption specific surface area by the BET method of 73.6 $m^2/g$, and contains about 17 mass% of ash.

The content of the recovered carbon black is preferably 1 to 100 parts by mass per 100 parts by mass of the rubber component (A), more preferably 5 to 80 parts by mass, still more preferably 5 to 50 parts by mass, even more preferably 5 to 30 parts by mass, and particularly preferably 5 to 20 parts by mass. When the content of recovered carbon black is 5 parts by mass or more per 100 parts by mass of the rubber component (A), the effect of improving the ratio of sustainable materials in rubber products to which the rubber composition is applied is significant, and when it is 50 parts by mass or less, the fracture resistance of the rubber composition can be more reliably maintained.

The proportion of silica in the total content of silica and carbon black is not particularly limited, and may be appropriately adjusted, for example, according to the tire category to which it is applied, the tire component, target performance, etc. For example, in the case of tread rubber for passenger vehicle tires, the proportion of silica in the total content of silica and carbon black is preferably 50 mass% or more, more preferably 70 mass% or more, still more preferably 80 mass% or more, even more preferably 90 mass% or more, and particularly preferably 95 mass% or more. The proportion of silica in the total content of silica and carbon black may be 100 mass%, but is preferably 98 mass% or less.

As the filler, in addition to the above-mentioned silica and carbon black, calcium carbonate, talc, alumina, clay, aluminum hydroxide, mica, and the like can be mentioned.

(Silane Coupling Agent (C))

The rubber composition obtained by the method for producing a rubber composition of the present embodiment contains a silane coupling agent (C). As the silane coupling agent (C), a compound represented by any of the following general formulas (I) to (IV) is preferred. By using these compounds as the silane coupling agent (C), operability during rubber processing is further improved, and a rubber composition with better wear resistance can be produced.

$$(R^1O)_{3-p}(R^2)_pSi\text{-}R^3\text{-}S_a\text{-}R^3\text{-}Si(OR^1)_{3-r}(R^2)_r \qquad (I)$$

In the above general formula (I), $R^1$ may be the same or different when there are multiple, and is each a straight-chain, cyclic, or branched alkyl group having 1 to 8 carbon atoms, a straight-chain or branched alkoxyalkyl group having 2 to 8 carbon atoms, or a hydrogen atom; $R^2$ may be the same or different when there are multiple, and is each a straight-chain, cyclic, or branched alkyl group having 1 to 8 carbon atoms; $R^3$ may be the same or different when there are multiple, and is each a straight-chain or branched alkylene group having 1 to 8 carbon atoms. "a" is an average value of 2 to 6, and p and r may be the same or different, and are each an average value of 0 to 3. However, both p and r are not 3 at the same time.

Specific examples of the silane coupling agent (C) represented by the above general formula (I) include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide,

bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like.

[Chem. 3]

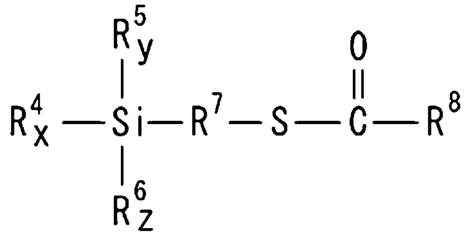

···(II)

In the above general formula (II), $R^4$ is a monovalent group selected from -Cl, -Br, $R^9O$-, $R^9C(=O)O$-, $R^9R^{10}C$-NO-, $R^9R^{10}CNO$-, $R^9R^{10}N$-, and $-(OSiR^9R^{10})_h(OSiR^9R^{10}R^{11})$ ($R^9$, $R^{10}$, and $R^{11}$ may be the same or different, and are each a hydrogen atom or a monovalent hydrocarbon group having 1 to 18 carbon atoms, and h is an average value of 1 to 4); $R^5$ is $R^4$, a hydrogen atom, or a monovalent hydrocarbon group having 1 to 18 carbon atoms; $R^6$ is $R^4$, $R^5$, a hydrogen atom, or a $-[O(R^{12}O)_j]_{0.5}$- group ($R^{12}$ is an alkylene group having 1 to 18 carbon atoms, and j is an integer of 1 to 4); $R^7$ is a divalent hydrocarbon group having 1 to 18 carbon atoms; $R^8$ is a monovalent hydrocarbon group having 1 to 18 carbon atoms; and x, y, and z are numbers satisfying the relationship $x + y + 2z = 3$, $0 \leq x \leq 3$, $0 \leq y \leq 2$, and $0 \leq z \leq 1$.

In the above general formula (II), $R^8$, $R^9$, $R^{10}$, and $R^{11}$ may be the same or different, and are preferably each a group selected from the group consisting of straight-chain, cyclic, or branched alkyl groups, alkenyl groups, aryl groups, and aralkyl groups having 1 to 18 carbon atoms. Also, when $R^5$ is a monovalent hydrocarbon group having 1 to 18 carbon atoms, it is preferably a group selected from the group consisting of straight-chain, cyclic, or branched alkyl groups, alkenyl groups, aryl groups, and aralkyl groups. $R^{12}$ is preferably a straight-chain, cyclic, or branched alkylene group, and particularly preferably a straight-chain group. $R^7$ can be, for example, an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, or an aralkylene group having 7 to 18 carbon atoms. The alkylene group and alkenylene group may be straight-chain or branched, and the cycloalkylene group, cycloalkylalkylene group, arylene group, and aralkylene group may have a substituent such as a lower alkyl group on the ring. As $R^7$, a straight-chain alkylene group having 1 to 6 carbon atoms is preferred, and particularly preferred examples include methylene, ethylene, trimethylene, tetramethylene, pentamethylene, and hexamethylene groups.

Specific examples of the monovalent hydrocarbon group having 1 to 18 carbon atoms for $R^5$, $R^8$, $R^9$, $R^{10}$, and $R^{11}$ in the above general formula (II) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, and naphthylmethyl groups.

Examples of $R^{12}$ in the above general formula (II) include methylene, ethylene, trimethylene, tetramethylene, pentamethylene, hexamethylene, octamethylene, decamethylene, and dodecamethylene groups.

Specific examples of the silane coupling agent (C) represented by the above general formula (II) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among these, 3-octanoylthiopropyltriethoxysilane (manufactured by General Electric Silicones, trademark: NXT Silane) is particularly preferred.

$$(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \ \cdots \qquad (III)$$

In the above general formula (III), $R^{13}$ may be the same or different when there are multiple, and is each a straight-chain, cyclic, or branched alkyl group having 1 to 8 carbon atoms, a straight-chain or branched alkoxyalkyl group having 2 to 8 carbon atoms, or a hydrogen atom; $R^{14}$ may be the same or different when there are multiple, and is each a straight-chain, cyclic, or branched alkyl group having 1 to 8 carbon atoms; $R^{15}$ may be the same or different when there are multiple, and is each a straight-chain or branched alkylene group having 1 to 8 carbon atoms. $R^{16}$ is a divalent group of any of the following general formulas: ($-S-R^{17}-S-$), ($-R^{18}-S_{m1}-R^{19}-$), and ($-R^{20}-S_{m2}-R^{21}-S_{m3}-R^{22}-$) ($R^{17}$ to $R^{22}$ are each a divalent hydrocarbon group having 1 to 20 carbon atoms, a divalent aromatic group, or a divalent organic group containing a hetero element other than sulfur and oxygen, and m1, m2, and m3 are each an average value of 1 or more and less than 4); k,

when there are multiple, may be the same or different, and is each an average value of 1 to 6; and s and t are each an average value of 0 to 3. However, both s and t are not 3 at the same time.

Specific examples of the silane coupling agent (C) represented by the above general formula (III) include compounds represented by the following average compositional formulas:

Average compositional formula:

$$(CH_3CH_2O)_3Si-(CH_2)_3-S_2-(CH_2)_6-S_2-(CH_2)_3-Si(OCH_2CH_3)_3,$$

Average compositional formula:

$$(CH_3CH_2O)_3Si-(CH_2)_3-S_2-(CH_2)_{10}-S_2-(CH_2)_3-Si(OCH_2CH_3)_3,$$

Average compositional formula:

$$(CH_3CH_2O)_3Si-(CH_2)_3-S_3-(CH_2)_6-S_3-(CH_2)_3-Si(OCH_2CH_3)_3,$$

Average compositional formula:

$$(CH_3CH_2O)_3Si-(CH_2)_3-S_4-(CH_2)_6-S_4-(CH_2)_3-Si(OCH_2CH_3)_3,$$

Average compositional formula:

$$(CH_3CH_2O)_3Si-(CH_2)_3-S-(CH_2)_6-S_2-(CH_2)_6-S-(CH_2)_3-Si(OCH_2CH_3)_3,$$

,

Average compositional formula:

$$(CH_3CH_2O)_3Si-(CH_2)_3-S-(CH_2)_6-S_{2.5}-(CH_2)_6-S-(CH_2)_3-Si(OCH_2CH_3\ )3,$$

Average compositional formula:

$$(CH_3CH_2O)_3Si-(CH_2)_3-S-(CH_2)_6-S_3-(CH_2)_6-S-(CH_2)_3-Si(OCH_2CH_3)_3,$$

Average compositional formula:

$$(CH_3CH_2O)_3Si-(CH_2)_3-S-(CH_2)_6-S_4-(CH_2)_6-S-(CH_2)_3-Si(OCH_2CH_3)_3,$$

Average compositional formula:

$$(CH_3CH_2O)_3Si-(CH_2)_3-S-(CH_2)_{10}-S_2-(CH_2)_{10}-S-(CH_2)_3-Si(OCH_2CH_3\ )3,$$

Average compositional formula:

$$(CH_3CH_2O)_3Si-(CH_2)_3-S_4-(CH_2)_6-S_4-(CH_2)_6-S_4-(CH_2)_3-\ Si(OCH_2CH_3)_3,$$

Average compositional formula:

$$(CH_3CH_2O)_3Si-(CH_2)_3-S_2-(CH_2)_6-S_2-(CH_2)_6-S_2-(CH_2)_3-Si(OCH_2CH_3\ )3,$$

Average compositional formula:

$$(CH_3CH_2O)_3Si-(CH_2)_3-S-(CH_2)_6-S_2-(CH_2)_6-S_2-(CH_2)_6-S-(CH_2)_3-Si(\ OCH_2CH_3)_3,$$

and the like.

[Chem. 4]

$$\underbrace{[R^{23}-C(=O)-S-G-SiZ^{a}_{u}Z^{b}_{v}Z^{c}_{w}]_{m}}_{A}\ \underbrace{[HS-G-SiZ^{a}_{u}Z^{b}_{v}Z^{c}_{w}]_{n}}_{B}\quad \cdots (IV)$$

In the above general formula (IV), $R^{23}$ is a straight-chain, branched, or cyclic alkyl group having 1 to 20 carbon atoms; the plurality of G may be the same or different, and each is an alkylene group or alkenylene group having 1 to 9 carbon atoms; the plurality of $Z^a$ may be the same or different, and each is a functional group capable of bonding to two silicon atoms, and is a functional group selected from $[-O-]_{0.5}$, $[-O-G-]_{0.5}$, and $[-O-G-O-]_{0.5}$; the plurality of $Z^b$ may be the same or different, and each is a functional group capable of bonding to two silicon atoms, and is a functional group represented by $[-O-G-O-]_{0.5}$; the plurality of $Z^c$ may be the same or different, and each is a functional group selected from -Cl, -Br, $-OR^{24}$, $R^{24}C(=O)O-$, $R^{24}R^{25}C=NO-$, $R^{24}R^{25}N-$, $R^{24}-$, and HO-G-O-(where G is as defined above); $R^{24}$ and $R^{25}$ are each a straight-chain, branched, or cyclic alkyl group having 1 to 20 carbon atoms. m, n, u, v, and w are integers satisfying $1 \le m \le 20$, $0 \le n \le 20$, $0 \le u \le 3$, $0 \le v \le 2$, $0 \le w \le 1$, and $(u/2) + v + 2w = 2$ or 3. When there are a plurality of A moieties, $Z^a_u$, $Z^b_v$, and $Z^c_w$ in the plurality of A moieties may be the same or different, and when there are a plurality of B moieties, $Z^a_u$, $Z^b_v$, and $Z^c_w$ in the plurality of B moieties may be the same or different.

Specific examples of the silane coupling agent (C) represented by the above general formula (IV) include the following structural formulas (V), (VI), and (VII).

[Chem. 5]

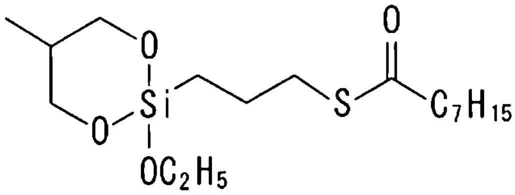

···(V)

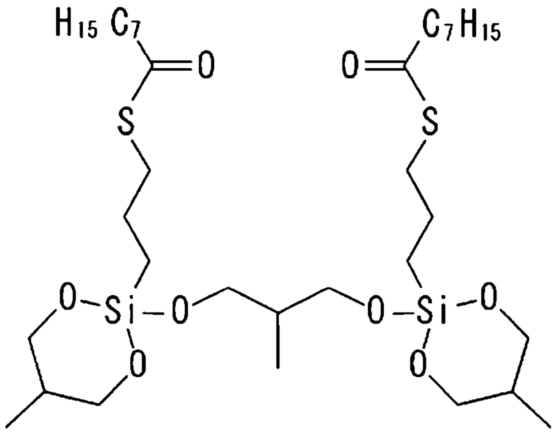

···(VI)

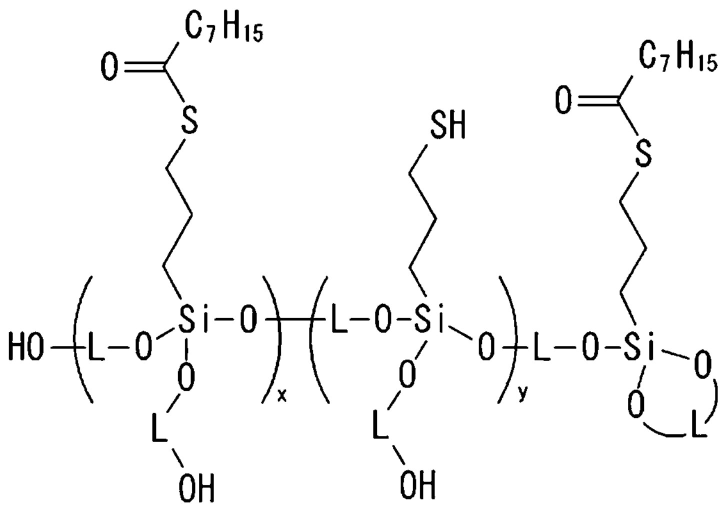

···(VII)

In structural formula (VII), L is independently an alkylene group or alkenylene group having 1 to 9 carbon atoms, x = m, and y = n.

As the silane coupling agent represented by structural formula (V), a commercially available product is "NXT Low-V Silane" manufactured by Momentive Performance Materials.

Similarly, as the silane coupling agent represented by structural formula (VI), a commercially available product is "NXT Ultra Low-V Silane" manufactured by Momentive Performance Materials.

Furthermore, as the silane coupling agent represented by structural formula (VII), "NXT-Z" manufactured by Momentive Performance Materials can be cited.

The silane coupling agents represented by the above general formula (II), structural formula (V), and structural

formula (VI) have protected mercapto groups, so initial vulcanization (scorching) during processing before the vulcanization step can be prevented, resulting in good processability.

In addition, the silane coupling agents represented by structural formulas (V), (VI), and (VII) have a large number of alkoxysilane carbons, so the generation of volatile organic compounds (VOCs), particularly alcohols, is low, which is preferable for the working environment. Moreover, the silane coupling agent of structural formula (VII) is further preferable because it provides low heat generating property as a tire performance.

Among the compounds represented by the above general formulas (I) to (IV), the compound represented by the above general formula (I) is particularly preferable as the silane coupling agent (C). This is because the silica-silane coupling agent reaction accelerator compound (D) easily activates the polysulfide bonding site that reacts with the rubber component (A).

The silane coupling agent (C) may be used alone or in combination of two or more kinds.

It should be noted that bioethanol can also be used as a raw material for the silane coupling agent (C). Bioethanol is produced mainly from saccharides and/or cellulose as biological resources, and other biological resources such as proteins, lipids, and amino acids cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the silane coupling agent (C), or to use a combination of ethanol derived from biological resources (bioethanol), ethanol derived from recycled resources, and ethanol derived from fossil resources. In this way, it is possible to effectively utilize a wide range of biological resources such as sugars, proteins, and lipids, as well as recycled resources, without relying on a single biological resource, and to take environmental considerations into account according to the manufacturing situation.

The blending amount of the silane coupling agent (C) is preferably such that the mass ratio {silane coupling agent (C)/inorganic filler (B)} is (1/100) to (20/100). If it is (1/100) or more, the effect of improving the low heat generating property of the rubber composition can be more suitably exhibited, and if it is (20/100) or less, the cost of the rubber composition is reduced and economic efficiency is improved. More preferably, the mass ratio is (3/100) to (20/100), and particularly preferably, the mass ratio is (4/100) to (10/100).

(Silica-silane coupling agent reaction accelerator compound (D))

The rubber composition obtained by the method for producing a rubber composition of the present embodiment contains a silica-silane coupling agent reaction accelerator compound (D). The silica-silane coupling agent reaction accelerator compound (D) acts as a reaction catalyst for the alkoxy group and promotes the reaction between silica and the silane coupling agent in the first stage of kneading. In addition, as the reactivity between silica and the silane coupling agent increases, the reinforcing property of silica and the dispersibility into the rubber component (A) are enhanced, and the low heat generating property and wear resistance of the rubber composition are improved.

The silica-silane coupling agent reaction accelerator compound (D) is preferably at least one selected from the group consisting of a guanidine, a thiuram, a dithiocarbamate, a thiourea, a xanthate, a tertiary amine compound, an inorganic salt hydrate, 1,2-benzenediol, an imidazole compound, an organic sulfonic acid, and water. These compounds have a high effect of promoting the reaction between silica and the silane coupling agent, and the low heat generating property of the resulting rubber composition is further improved.

Examples of the guanidine include 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among these, from the viewpoint of reactivity, 1,3-diphenylguanidine, 1,3-di-o-tolylguanidine, and 1-o-tolylbiguanide are preferable, and 1,3-diphenylguanidine is particularly preferable. By using 1,3-diphenylguanidine as the silica-silane coupling agent reaction accelerator compound (D), the low heat generating property of the resulting rubber composition is further improved.

Examples of the thiuram include tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylthiuram monosulfide, dipentamethylenethiuram tetrasulfide, and the like. Among these, tetrakis(2-ethylhexyl)thiuram disulfide and tetrabenzylthiuram disulfide are preferable because of their high reactivity. By using at least one compound selected from tetrakis(2-ethylhexyl)thiuram disulfide and tetrabenzylthiuram disulfide as the silica-silane coupling agent reaction accelerator

compound (D), the low heat generating property of the resulting rubber composition is further improved.

Examples of the dithiocarbamate include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, iron(II) dimethyldithiocarbamate, iron(II) diethyldithiocarbamate, iron(II) dipropyldithiocarbamate, iron(II) diisopropyldithiocarbamate, iron(II) dibutyldithiocarbamate, iron(II) dipentyldithiocarbamate, iron(II) dihexyldithiocarbamate, iron(II) diheptyldithiocarbamate, iron(II) dioctyldithiocarbamate, iron(II) di(2-ethylhexyl)dithiocarbamate, iron(II) didecyldithiocarbamate, iron(II) didodecyldithiocarbamate, iron(II) N-pentamethylenedithiocarbamate, iron(II) dibenzyldithiocarbamate, and the like. Among these, zinc dibenzyldithiocarbamate, zinc N-ethyl-N-phenyldithiocarbamate, zinc dimethyldithiocarbamate, and copper dimethyldithiocarbamate are preferable because of their high reactivity. By using at least one compound selected from zinc dibenzyldithiocarbamate, zinc N-ethyl-N-phenyldithiocarbamate, zinc dimethyldithiocarbamate, and copper dimethyldithiocarbamate as the silica-silane coupling agent reaction accelerator compound (D), the low heat generating property of the resulting rubber composition is further improved.

Examples of the thiourea include N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, o-tolylthiourea, and the like. Among these, N,N'-diethylthiourea, trimethylthiourea, N,N'-diphenylthiourea, and N,N'-dimethylthiourea are preferable because of their high reactivity. By using at least one compound selected from N,N'-diethylthiourea, trimethylthiourea, N,N'-diphenylthiourea, and N,N'-dimethylthiourea as the silica-silane coupling agent reaction accelerator compound (D), the low heat generating property of the resulting rubber composition is further improved.

Examples of the xanthate salt include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, sodium dodecylxanthate, and the like. Among these, zinc isopropylxanthate is preferred due to its high reactivity. By using zinc isopropylxanthate as the silica-silane coupling agent reaction accelerator compound (D), the low heat generating property of the resulting rubber composition is further improved.

As the tertiary amine compound, a tertiary amine compound represented by the following general formula (i):

[Chem. 6]

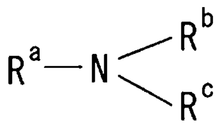

···(i)

is preferred. By using a tertiary amine compound represented by the above general formula (i) as the silica-silane coupling agent reaction accelerator compound (D), the low heat generating property of the resulting rubber composition is further improved.

In the above general formula (i), $R^a$, $R^b$, and $R^c$ may be the same or different, and each is one selected from a methyl group, an alkyl group having 2 to 36 carbon atoms, an alkenyl group having 8 to 36 carbon atoms, a cyclohexyl

group, and a benzyl group. Here, it is further preferred that at least one of $R^a$, $R^b$, and $R^c$ is an alkyl group having 2 to 36 carbon atoms, an alkenyl group having 8 to 36 carbon atoms, a cyclohexyl group, or a benzyl group. A dimethylalkylamine where, in the formula, $R^a$ and $R^b$ represent methyl groups and $R^c$ represents an alkyl group having 12 to 36 carbon atoms is particularly preferable. Examples include dimethylstearylamine, dimethylmyristylamine, dimethyloctadecenylamine, dimethylhexadecenylamine, and dimethyldodecylamine.

Further, when the molecular weight of the tertiary amine compound represented by the above general formula (i) is 180 or more, it is preferred because the reaction can be carried out at room temperature. On the other hand, if the molecular weight of the tertiary amine compound is less than 180, the boiling point of the tertiary amine compound becomes lower than room temperature, making it impossible to react at room temperature and deteriorating operability.

In the first stage of kneading, it is preferred to knead 2 to 10 parts by mass of the above tertiary amine compound per 100 parts by mass of the rubber component (A), and more preferably 2 to 6 parts by mass. When the compounding amount of the above tertiary amine compound is 2 parts by mass or more, the intended improvement in dispersibility and wear resistance can be exhibited, and when it is 10 parts by mass or less, the effect of improving the dispersibility of silica does not become saturated, and conversely, the above tertiary amine compound does not disadvantageously act as a plasticizer, so wear resistance can be ensured and is preferred.

As the inorganic salt hydrate, sodium borate hydrate (hydrated borax) is preferred, and borax (borax: $Na_2B_4O_7 \cdot 10H_2O$) is particularly preferred. By using sodium borate hydrate as the silica-silane coupling agent reaction accelerator compound (D), the low heat generating property of the resulting rubber composition is further improved. In the first stage of kneading, it is preferred to knead 1 to 10 parts by mass of the above inorganic salt hydrate per 100 parts by mass of the rubber component (A), and more preferably 1 to 4 parts by mass. When the compounding amount of the above inorganic salt hydrate is 1 part by mass or more, the intended improvement in dispersibility and wear resistance can be exhibited, and when it is 10 parts by mass or less, deterioration of kneading operability due to generation of moisture can be avoided, which is preferred.

As for 1,2-benzenediol used as the silica-silane coupling agent reaction accelerator compound (D), in the first stage of kneading, it is preferred to knead 0.3 to 4 parts by mass of 1,2-benzenediol per 100 parts by mass of the rubber component (A), and more preferably 0.5 to 2 parts by mass. When the compounding amount of 1,2-benzenediol is 0.3 parts by mass or more, the intended improvement in dispersibility and wear resistance can be exhibited, and when it is 4 parts by mass or less, the vulcanization rate does not become slow, which is preferred.

As the imidazole compound, an imidazole compound represented by the following general formula (ii):

[Chem. 7]

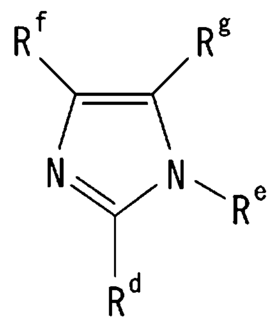

$\cdots$ (ii)

is preferred. By using an imidazole compound represented by the above general formula (ii) as the silica-silane coupling agent reaction accelerator compound (D), the low heat generating property of the resulting rubber composition is further improved.

In the above general formula (ii), $R^d$, $R^e$, $R^f$, and $R^g$ may be the same or different, and each is a hydrogen atom or a monovalent organic group. However, two or more of $R^d$, $R^e$, $R^f$, and $R^g$ may be bonded to form a ring. Examples of the above imidazole compound include imidazole, 4-ethylaminoimidazole, 2-mercapto-1-methylimidazole, 1-methylimidazole, 2,4,5-triphenylimidazole, 2-methylimidazole, 2-ethyl-4-methylimidazole, 2-heptadecylimidazole, and the like, with imidazole being preferred.

In the first stage of kneading, it is preferred to knead 0.3 to 4 parts by mass of the above imidazole compound per 100 parts by mass of the rubber component (A), and more preferably 0.5 to 2 parts by mass. When the compounding amount of the above imidazole compound is 0.3 parts by mass or more, the intended improvement in dispersibility and wear resistance can be exhibited, and when it is 4 parts by mass or less, the scorching property is not deteriorated, which is preferred.

As the organic sulfonic acid, p-toluenesulfonic acid and benzenesulfonic acid are preferred. By using at least one

compound selected from p-toluenesulfonic acid and benzenesulfonic acid as the silica-silane coupling agent reaction accelerator compound (D), the low heat generating property of the resulting rubber composition is further improved.

In the first stage of kneading, it is preferred to knead 0.3 to 4 parts by mass of the above organic sulfonic acid per 100 parts by mass of the rubber component (A), and more preferably 0.5 to 2 parts by mass. When the compounding amount of the above organic sulfonic acid is 0.3 parts by mass or more, the intended improvement in dispersibility and wear resistance can be exhibited, and when it is 4 parts by mass or less, the vulcanization rate does not become slow, which is preferred.

As for water used as the silica-silane coupling agent reaction accelerator compound (D), in the first stage of kneading, it is preferred to knead 0.5 to 8 parts by mass of water per 100 parts by mass of the rubber component (A). When the compounding amount of water is 0.5 parts by mass or more, the intended improvement in dispersibility and wear resistance can be exhibited, and when it is 8 parts by mass or less, the kneading efficiency of the kneader is not reduced, which is preferred.

The number of molecules (moles) of the silica-silane coupling agent reaction accelerator compound (D) in the rubber composition in the first stage of kneading is preferably 0.1 to 1.0 times the number of molecules (moles) of the silane coupling agent (C). If it is 0.1 times or more, activation of the silane coupling agent (C) occurs sufficiently, and if it is 1.0 times or less, there is no significant effect on the vulcanization rate. More preferably, the number of molecules (moles) of the silica-silane coupling agent reaction accelerator compound (D) is 0.2 to 0.6 times the number of molecules (moles) of the silane coupling agent (C).

Note that, since the silica-silane coupling agent reaction accelerator compound (D) can also be used as an accelerator for sulfur vulcanization (vulcanization accelerator), an appropriate amount may also be compounded as desired in the final stage of kneading. When compounding the silica-silane coupling agent reaction accelerator compound (D) in the final stage of kneading, it is not limited to the silica-silane coupling agent reaction accelerator compound (D) according to the present disclosure, and a known vulcanization accelerator may also be compounded.

(Organic Acid Compound (E))

The rubber composition obtained by the method for producing a rubber composition of the present embodiment preferably further contains an organic acid compound (E). The method for producing a rubber composition of the present embodiment preferably further kneads the organic acid compound (E) in the first stage of kneading, and the number X of molecules of the organic acid compound (E) in the rubber composition in the first stage of kneading preferably satisfies the following formula (1) with respect to the number Y of molecules of the silica-silane coupling agent reaction accelerator compound (D):

$$0 \leq X \leq 1.5 \times Y \quad \cdots \quad (1)$$

By satisfying the relationship of formula (1) between the number X of molecules of the organic acid compound (E) in the rubber composition in the first stage of kneading and the number Y of molecules of the silica-silane coupling agent reaction accelerator compound (D), the activity of the coupling function is further enhanced, and the low heat generating property of the rubber composition can be further improved.

Examples of the organic acid compound (E) include saturated and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, baccenic acid, linoleic acid, linolenic acid, nervonic acid, and the like, as well as resin acids such as rosin acid and modified rosin acid, other such organic acids, and esters of the above saturated fatty acids, unsaturated fatty acids, and resin acids.

It is preferred that 50 mol% or more of the organic acid compound (E) contained in the rubber composition in the first stage of kneading is stearic acid. When 50 mol% or more of the organic acid compound (E) contained in the rubber composition in the first stage of kneading is stearic acid, the function as a vulcanization accelerator aid is sufficiently exhibited.

When the rubber component (A) contains at least one selected from emulsion-polymerized styrene-butadiene copolymer and natural rubber, it is preferred that 50 mol% or more of the organic acid compound (E) contained in the rubber composition in the first stage of kneading is at least one compound selected from rosin acid and fatty acid contained in the at least one selected from emulsion-polymerized styrene-butadiene copolymer and natural rubber. The rosin acid (including modified rosin acid) and fatty acid contained in the emulsion-polymerized styrene-butadiene copolymer are derived from the emulsifier necessary for polymerizing the emulsion-polymerized styrene-butadiene copolymer. In addition, natural rubber usually contains a small amount of fatty acid. Therefore, in this case, the amount of the organic acid compound (E) to be additionally compounded can be reduced.

(Resin)

The rubber composition obtained by the method for producing a rubber composition of the present embodiment may contain a resin. Examples of the resin include terpene-based resin, rosin-based resin, $C_5$-based resin, $C_5/C_9$-based resin, $C_9$-based resin, cyclopentadiene-based resin, aromatic-based resin, coumarone resin, indene resin, coumarone/indene-based resin, olefin-based resin, polyurethane resin, acrylic resin, and the like. These resins may be used alone or in combination of two or more. Among these resins, terpene-based resin, rosin-based resin, $C_5$-based resin, $C_5/C_9$-based resin, $C_9$-based resin, cyclopentadiene-based resin, and aromatic-based resin are preferred, and terpene-based resin and rosin-based resin are particularly preferred. Since terpene-based resin and rosin-based resin are sustainable resins of natural origin, environmental load can be further reduced, and tire performance such as gripping performance on various road surface conditions including dry road surface, wet road surface, snow-covered road surface, and icy road surface can be further improved. In addition, $C_5$-based resin, $C_9$-based resin, $C_5/C_9$-based resin, and cyclopentadiene-based resin can improve wear resistance and high fuel efficiency in a well-balanced manner. Furthermore, aromatic-based resin can improve gripping performance, wear resistance, and rubber strength in a well-balanced manner.

The resin may be hydrogenated, i.e., may be a hydrogenated resin. Further, the resin may be modified to introduce a functional group that interacts with a filler such as carbon black or silica. Examples of such functional groups include amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like.

The terpene-based resin is a solid resin obtained by compounding turpentine oil, which is obtained simultaneously with rosin from pine trees, or a polymerized component separated therefrom, and polymerizing using a Friedel-Crafts catalyst, and includes β-pinene resin, α-pinene resin, and the like. The terpene-based resin also includes terpene/aromatic compound-based resins, and representative examples of such terpene/aromatic compound-based resins include terpene-phenol resin, styrene-terpene resin, and the like. The terpene-phenol resin can be obtained by reacting terpenes and various phenols using a Friedel-Crafts catalyst, or further condensing with formalin. The styrene-terpene resin can be obtained by reacting styrene and terpenes using a Friedel-Crafts catalyst. There is no particular limitation on the terpenes as raw materials, but monoterpene hydrocarbons such as α-pinene and limonene are preferred, those containing α-pinene are more preferred, and α-pinene is particularly preferred.

As the rosin-based resin, examples include gum rosin, tall oil rosin, wood rosin, and the like, which are natural resin rosins contained in raw rosin and tall oil, as well as modified rosin, rosin derivatives, and modified rosin derivatives, such as polymerized rosin, partially hydrogenated rosin thereof; glycerin ester rosin, partially hydrogenated rosin or completely hydrogenated rosin thereof; pentaerythritol ester rosin, partially hydrogenated rosin or polymerized rosin thereof; and the like.

As the $C_5$-based resin, examples include aliphatic petroleum resin obtained by (co)polymerizing a $C_5$ fraction obtained by thermal cracking of naphtha in the petrochemical industry. The $C_5$ fraction usually contains olefinic hydrocarbons such as 1-pentene, 2-pentene, 2-methyl-1-butene, 2-methyl-2-butene, 3-methyl-1-butene, and the like, and diolefinic hydrocarbons such as 2-methyl-1,3-butadiene, 1,2-pentadiene, 1,3-pentadiene, 3-methyl-1,2-butadiene, and the like.

The $C_5/C_9$-based resin refers to a $C_5/C_9$-based synthetic petroleum resin, and examples of the $C_5/C_9$-based resin include solid polymers obtained by polymerizing a petroleum-derived $C_5$-$C_{11}$ fraction using a Friedel-Crafts catalyst such as $AlCl_3$ or $BF_3$, and more specifically, copolymers mainly composed of styrene, vinyltoluene, α-methylstyrene, indene, and the like. As the $C_5/C_9$-based resin, a resin with a low content of $C_9$ or higher components is preferred from the viewpoint of compatibility with the rubber component. Here, "low content of $C_9$ or higher components" means that the content of $C_9$ or higher components in the total amount of the resin is less than 50 mass%, preferably 40 mass% or less.

The $C_9$-based resin refers to a $C_9$-based synthetic petroleum resin, and refers to a solid polymer obtained by polymerizing a $C_9$ fraction using a Friedel-Crafts catalyst such as $AlCl_3$ or $BF_3$. Examples of the $C_9$-based resin include copolymers mainly composed of indene, α-methylstyrene, vinyltoluene, and the like.

The cyclopentadiene-based resin refers to a resin containing units derived from a cyclopentadiene-based monomer as monomer units. Examples of such cyclopentadiene-based resins include homopolymers of cyclopentadiene-based monomers, copolymers of two or more cyclopentadiene-based monomers, and copolymers of cyclopentadiene-based monomers with other monomers. Here, examples of cyclopentadiene-based monomers include cyclopentadiene, dicyclopentadiene, tricyclopentadiene, and the like; among these, dicyclopentadiene is preferred, that is, as the cyclopentadiene-based resin, a dicyclopentadiene-based resin is preferred. The dicyclopentadiene-based resin refers, for example, to a resin obtained by polymerizing dicyclopentadiene using a Friedel-Crafts catalyst such as $AlCl_3$ or $BF_3$. Examples of dicyclopentadiene-based resins include homopolymers of dicyclopentadiene, copolymers of dicyclopentadiene and aromatic monomers, and copolymers of dicyclopentadiene and $C_9$ fractions (such as vinyltoluene, indene, etc.).

The aromatic-based resin refers to a resin containing units derived from an aromatic monomer as monomer units.

Examples of such aromatic-based resins include homopolymers of aromatic monomers, copolymers of two or more aromatic monomers, and copolymers of aromatic monomers with other monomers. Here, examples of aromatic monomers include styrene-based monomers such as styrene, o-methylstyrene, m-methylstyrene, p-methylstyrene, $\alpha$-methylstyrene, p-methoxystyrene, p-tert-butylstyrene, o-chlorostyrene, m-chlorostyrene, p-chlorostyrene, and p-phenylstyrene; phenol-based monomers such as phenol, alkylphenol, and alkoxyphenol; naphthol-based monomers such as naphthol, alkylnaphthol, and alkoxynaphthol; and the like.

The resin preferably has a softening point of 30°C or higher, more preferably 60°C or higher, even more preferably 80°C or higher, still more preferably higher than 110°C, yet more preferably 116°C or higher, further preferably 120°C or higher, even further preferably 123°C or higher, and most preferably 127°C or higher. From the viewpoint of processability, the resin preferably has a softening point of 160°C or lower, more preferably 150°C or lower, even more preferably 145°C or lower, still more preferably 141°C or lower, and most preferably 136°C or lower.

Note that, in the present specification, the softening point of the resin is measured as the temperature at which the ball drops using a ring-and-ball softening point measuring apparatus, as defined in JIS K 6220-1:2015 (ISO 28641:2010).

Commercially available products can be used as the resin. Examples of such commercially available resins include products from ENEOS Corporation, Arakawa Chemical Industries, Ltd., ExxonMobil Corporation, Kraton Corporation, Yasuhara Chemical Co., Ltd., Maruzen Petrochemical Co., Ltd., Sumitomo Bakelite Co., Ltd., Tosoh Corporation, Rutgers Chemicals, BASF, Kraton Polymers LLC, Nitto Chemical Industry Co., Ltd., Nippon Shokubai Co., Ltd., Taoka Chemical Co., Ltd., and the like.

The content of the resin is not particularly limited and may be appropriately adjusted depending on, for example, the target tire category, tire member, target performance, and the like. For example, the content of the resin is preferably in the range of 5 to 100 parts by mass, and more preferably in the range of 10 to 60 parts by mass, per 100 parts by mass of the rubber component (A).

(Rubber Powder)

The rubber composition obtained by the method for producing a rubber composition of the present embodiment may contain rubber powder. The rubber powder may be obtained by pulverizing used rubber products such as used tires, and, as desired, removing reinforcing members such as steel materials and fibers, dust, glass, sand, stones, and the like, or by preparing a newly vulcanized rubber composition for the purpose of producing rubber powder and pulverizing it. For example, rubber powder can be obtained from vulcanized rubber by the method described in "Rubber Chemistry And Technology." In the process of pulverizing vulcanized rubber to obtain rubber powder, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at an extremely low temperature and then pulverized into fine particles. For removal of steel materials, a magnetic separator or the like can be used, and for removal of fibers, an air separator or the like can be used. Commercially available products can also be used as the rubber powder, and examples of such commercially available rubber powder include products from Global Corporation or Nantong Huili Rubber Corporation. From the viewpoint of reducing environmental impact, it is preferable to use rubber powder obtained by pulverizing used rubber products such as used tires. The rubber powder may be used alone or in combination of two or more types.

The composition of the rubber powder is not particularly limited and depends on the composition of the vulcanized rubber of the used rubber product (used tire) used as the raw material. In one embodiment, the rubber powder contains a rubber component, carbon black, silica, and the like. The rubber component, carbon black, silica, and the like contained in the rubber powder may be the same as or different from the rubber component, carbon black, silica, and the like that may be contained in the rubber composition obtained by the method for producing a rubber composition of the present embodiment described above.

The rubber powder preferably has a volume-average particle diameter of 1000 $\mu$m or less, more preferably 500 $\mu$m or less, even more preferably 200 $\mu$m or less, and most preferably 100 $\mu$m or less. The smaller the volume-average particle diameter of the rubber powder, the better, and the lower limit is not particularly limited.

Note that, in the present specification, the volume-average particle diameter is measured using a laser diffraction particle size distribution measuring apparatus, and, for example, can be measured using "CAPA500" manufactured by HORIBA, Ltd.

The rubber powder preferably has a 60-mesh sieve residue of less than 1 mass%, more preferably 0.5 mass% or less, even more preferably 0.1 mass% or less, and the lower limit is not particularly limited. The rubber powder preferably has an 80-mesh sieve residue of less than 10 mass%, more preferably 1 mass% or less, even more preferably 0.5 mass% or less, and the lower limit is not particularly limited.

Note that, in the present specification, the sieve residue is measured in accordance with ASTM D5644-01.

The rubber powder preferably has an acetone extract content of 12 mass% or less, more preferably 11 mass% or

less, even more preferably 10 mass% or less, and preferably 1 mass% or more, more preferably 2 mass% or more, and even more preferably 3 mass% or more.

Note that, in the present specification, the acetone extract content in the rubber powder refers to the acetone extract content (%) determined by the acetone extraction method in accordance with JIS K6350.

The content of the rubber powder is not particularly limited and may be appropriately adjusted depending on, for example, the target tire category, tire member, target performance, and the like. For example, the content of the rubber powder is preferably 1 part by mass or more, more preferably 2 parts by mass or more, and even more preferably 3 parts by mass or more, and preferably 200 parts by mass or less, more preferably 150 parts by mass or less, even more preferably 100 parts by mass or less, still more preferably 50 parts by mass or less, yet more preferably 30 parts by mass or less, further preferably 15 parts by mass or less, even further preferably 10 parts by mass or less, and most preferably 5 parts by mass or less, per 100 parts by mass of the rubber component (A).

(Liquid Softener)

The rubber composition obtained by the method for producing a rubber composition of the present embodiment may contain a liquid softener. Here, "liquid softener" refers to a compounding agent that is liquid at 25°C (room temperature) and has the function of softening the rubber composition. The liquid softener is not particularly limited, and examples include oils, liquid polymers, and the like; among these, oils are preferred. These liquid softeners may be used alone or in combination of two or more types.

The term "oil" is a general term for extender oil contained in the rubber component and liquid oil components added as compounding agents in the rubber composition, and examples include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffin process oil, aromatic process oil, naphthenic process oil, and the like. Commercially available products can be used as the oil, and examples of such commercially available oils include products from Idemitsu Kosan Co., Ltd., SANKYO YUKA KOGYO K.K., ENEOS Corporation, Orisoy, H&R, Toyokuni Oil Co., Ltd., Showa Shell Sekiyu K.K., Nisshin OilliO Group, Ltd., and the like. These oils may be used alone or in combination of two or more types.

As the liquid polymer, a liquid diene-based polymer is preferred. Examples of such liquid diene-based polymers include liquid styrene-butadiene copolymer (liquid SBR), liquid polybutadiene (liquid BR), liquid polyisoprene (liquid IR), liquid styrene-isoprene copolymer (liquid SIR), liquid styrene-butadienestyrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and their terminals or main chains may be modified with functional groups (polar groups). These liquid polymers may be used alone or in combination of two or more types.

The content of the liquid softener is not particularly limited and may be appropriately adjusted depending on, for example, the target tire category, tire member, target performance, and the like. For example, the content of the liquid softener is preferably 5 parts by mass or more, more preferably 10 parts by mass or more, and preferably 100 parts by mass or less, more preferably 70 parts by mass or less, even more preferably 50 parts by mass or less, and most preferably 30 parts by mass or less, per 100 parts by mass of the rubber component (A).

(Antioxidant)

The rubber composition obtained by the method for producing a rubber composition of the present embodiment may contain an antioxidant. Examples of such antioxidants include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 2,2,4-trimethyl-1,2-dihydroquinoline polymer (TMDQ), 6-ethoxy-2,2,4-trimethyl-1,2-dihydroquinoline (AW), 6-anilino-2,2,4-trimethyl-1,2-dihydroquinoline, and the like. Commercially available products can be used as the antioxidant, and examples of such commercially available antioxidants include products from Ouchi Shinko Chemical Industrial Co., Ltd., Sumitomo Chemical Co., Ltd., Seiko-Chemical Co., Ltd., Flexsys, and the like. These antioxidants may be used alone or in combination of two or more types.

The content of the antioxidant is not particularly limited and may be appropriately adjusted depending on, for example, the target tire category, tire member, target performance, and the like. For example, the content of the antioxidant is preferably 1 part by mass or more, more preferably 1.5 parts by mass or more, even more preferably 2 parts by mass or more, and preferably 12 parts by mass or less, more preferably 10 parts by mass or less, and even more preferably 8 parts by mass or less, per 100 parts by mass of the rubber component (A).

(Wax)

The rubber composition obtained by the method for producing a rubber composition of the present embodiment may contain wax. Examples of such waxes include natural waxes such as plant-based waxes and animal-based waxes; petroleum-based waxes such as paraffin wax and microcrystalline wax; synthetic waxes such as polymers of ethylene and polymers of propylene; and the like. Commercially available products can be used as the wax, and examples of such commercially available waxes include products from Seiko-Chemical Co., Ltd., Nippon Seiro Co., Ltd., Ouchi Shinko Chemical Industrial Co., Ltd., and the like. These waxes may be used alone or in combination of two or more types.
The content of the wax is not particularly limited and may be appropriately adjusted depending on, for example, the target tire category, tire member, target performance, and the like. For example, the content of the wax is preferably 0.5 part by mass or more, more preferably 1 part by mass or more, and preferably 10 parts by mass or less, more preferably 6 parts by mass or less, per 100 parts by mass of the rubber component (A).

(Stearic Acid)

The rubber composition obtained by the method for producing a rubber composition of the present embodiment may contain stearic acid. Commercially available products can be used as the stearic acid, and examples of such commercially available stearic acid include products from NOF Corporation, Kao Corporation, FUJIFILM Wako Pure Chemical Corporation, Chiba Fatty Acid Co., Ltd., and the like. These commercially available stearic acids may be used alone or in combination of two or more types.
The content of the stearic acid is not particularly limited and may be appropriately adjusted depending on, for example, the target tire category, tire member, target performance, and the like. For example, the content of the stearic acid is preferably 1 part by mass or more, more preferably 2 parts by mass or more, and preferably 10 parts by mass or less, more preferably 6 parts by mass or less, per 100 parts by mass of the rubber component (A).

(Zinc Oxide)

The rubber composition obtained by the method for producing a rubber composition of the present embodiment may contain zinc oxide (zinc white). As the zinc oxide, not only zinc oxide obtained from zinc ingot but also zinc oxide obtained from recycled zinc or zinc dross (i.e., obtained by recycling) is preferred. Commercially available products can be used as the zinc oxide, and examples of such commercially available zinc oxide include products from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides may be used alone or in combination of two or more types.
The content of the zinc oxide is not particularly limited and may be appropriately adjusted depending on, for example, the target tire category, tire member, target performance, and the like. For example, the content of the zinc oxide is preferably 1 part by mass or more, more preferably 2 parts by mass or more, and preferably 10 parts by mass or less, more preferably 6 parts by mass or less, per 100 parts by mass of the rubber component (A).

(Sulfur)

The rubber composition obtained by the method for producing a rubber composition of the present embodiment preferably contains sulfur. As the sulfur, those derived from fossil resources, those derived from recycled resources, and those obtained by processing biological resource-derived materials can be used, and from the viewpoint of reducing environmental impact, it is particularly preferable to use sulfur obtained from waste derived from biological resources. As a method for obtaining sulfur from waste derived from biological resources, for example, the method described in the above-mentioned Japanese Patent Application No. 2022-140390 can be used. As the sulfur, powdered sulfur, precipitated sulfur, colloidal sulfur, insoluble sulfur, highly dispersible sulfur, soluble sulfur, and the like, which are generally used as crosslinking agents in the rubber industry, can be used. Commercially available products can be used as the sulfur, and examples of such commercially available sulfur include products from Tsurumi Chemical Industry Co., Ltd., Hosoi Chemical Industry Co., Ltd., Karuizawa Sulfur Co., Ltd., Shikoku Chemicals Corp., Flexsys, and the like. These sulfurs may be used alone or in combination of two or more types.
The content of the sulfur is not particularly limited and may be appropriately adjusted depending on, for example, the target tire category, tire member, target performance, and the like. For example, the content of the sulfur is preferably 0.3 part by mass or more, more preferably 0.5 part by mass or more, even more preferably 0.8 part by mass or more, and preferably 8 parts by mass or less, more preferably 5 parts by mass or less, per 100 parts by mass of the rubber component (A).

(Vulcanization Accelerator)

The rubber composition obtained by the method for producing a rubber composition of the present embodiment preferably contains a vulcanization accelerator. The vulcanization accelerator can be used regardless of whether it is derived from fossil resources, recycled resources, or biological resources, but from the viewpoint of reducing environmental impact, it is preferably derived from biological resources. The vulcanization accelerator derived from biological resources can be obtained, for example, by the method disclosed in JP 2005-139239 A. It should be noted that the vulcanization accelerator partially overlaps with the above-described silica and silane coupling agent reaction accelerator compound (D).

As the vulcanization accelerator, examples include sulfenamide-based vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, and N,N'-diisopropyl-2-benzothiazolesulfenamide; guanidine-based vulcanization accelerators such as 1,3-diphenylguanidine (DPG), 1,3-di-o-tolylguanidine, and o-tolylbiguanidine; thiazole-based vulcanization accelerators such as 2-mercaptobenzothiazole (M) and di-2-benzothiazolyl disulfide (MBTS, DM); thiuram-based vulcanization accelerators such as tetramethylthiuram disulfide (TMTD), tetrastearylthiuram disulfide, tetrabenzylthiuram disulfide (TBzTD), and tetrakis(2-ethylhexyl)thiuram disulfide (TOT-N); and the like. Commercial products can be used as the vulcanization accelerator, and as commercial products of the vulcanization accelerator, products from Ouchi Shinko Chemical Industrial Co., Ltd., Sumitomo Chemical Co., Ltd., and the like can be used. These vulcanization accelerators may be used alone or in combination of two or more kinds.

The content of the vulcanization accelerator is not particularly limited and can be appropriately adjusted depending on, for example, the tire category to which it is applied, the tire member, target performance, and the like. For example, the content of the vulcanization accelerator is preferably 1 part by mass or more, more preferably 2 parts by mass or more, and still more preferably 3 parts by mass or more, and preferably 8 parts by mass or less, more preferably 6 parts by mass or less, and still more preferably 5.5 parts by mass or less, per 100 parts by mass of the rubber component (A).

(Cellulose Nanofiber)

The rubber composition obtained by the method for producing a rubber composition of the present embodiment may contain cellulose nanofiber (CNF). By blending cellulose nanofiber into the rubber composition, the rubber composition can be reinforced. As the cellulose nanofiber, modified cellulose nanofiber is preferred, and the modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by averaging the fiber diameters and fiber lengths obtained by observing each fiber using a scanning electron microscope (SEM), atomic force microscope (AFM), or transmission electron microscope (TEM). The cellulose nanofiber can be obtained by fibrillating cellulose. Further, the average fiber length and average fiber diameter of the fine fibers can be adjusted by oxidation treatment and fibrillation treatment.

The raw material of the cellulose nanofiber only needs to contain cellulose and is not particularly limited, but examples include plants (for example, wood, bamboo, hemp, jute, kenaf, agricultural residue, cloth, pulp (softwood unbleached kraft pulp (NUKP), softwood bleached kraft pulp (NBKP), hardwood unbleached kraft pulp (LUKP), hardwood bleached kraft pulp (LBKP), bleached kraft pulp (BKP), softwood unbleached sulfite pulp (NUSP), softwood bleached sulfite pulp (NBSP), thermomechanical pulp (TMP), recycled pulp, waste paper, etc.)), animals (for example, tunicates), algae, microorganisms (for example, acetic acid bacteria (Acetobacter)), microbial products, and the like. These cellulose raw materials may be used alone or in combination of two or more kinds.

The content of the cellulose nanofiber is not particularly limited and can be appropriately adjusted depending on, for example, the tire category to which it is applied, the tire member, target performance, and the like. For example, the content of the cellulose nanofiber is preferably in the range of 1 to 100 parts by mass, more preferably in the range of 5 to 70 parts by mass, and still more preferably in the range of 10 to 40 parts by mass, per 100 parts by mass of the rubber component (A).

(Porous Cellulose Particles)

The rubber composition obtained by the method for producing a rubber composition of the present embodiment may contain porous cellulose particles. The porous cellulose particles are preferably cellulose particles having a porous structure with a porosity of 75% to 95%, and by blending them into the rubber composition, on-ice performance can be improved. When the porosity of the porous cellulose particles is 75% or more, the effect of improving on-ice performance is excellent, and when the porosity is 95% or less, the strength of the particles can be increased. The porosity is more preferably 80% to 90%. The porosity of the porous cellulose particles can be determined by measuring the volume of a

certain mass of sample (i.e., porous cellulose particles) with a graduated cylinder, obtaining the bulk specific gravity, and calculating from the following formula:

Porosity (%) = {1 - [bulk specific gravity of sample (g/mL)] / [true specific gravity of sample (g/mL)]} × 100

Here, the true specific gravity of cellulose is 1.5.

The particle size of the porous cellulose particles is not particularly limited, but from the viewpoint of wear resistance, those having an average particle size of 1000 μm or less are preferred. The lower limit of the average particle size is not particularly limited, but is preferably 5 μm or more. The average particle size is more preferably 100 to 800 μm, and still more preferably 200 to 800 μm.

As the porous cellulose particles, spherical particles having a long diameter/short diameter ratio of 1 to 2 are preferred. By using such spherical structure particles, dispersibility in the rubber composition is improved, which can contribute to improvement in on-ice performance and maintenance of wear resistance and the like. The long diameter/-short diameter ratio is more preferably 1.0 to 1.5.

The average particle size and long diameter/short diameter ratio of the porous cellulose particles are determined as follows. That is, the porous cellulose particles are observed under a microscope to obtain images, and using these images, the long diameter and short diameter (if the long diameter and short diameter are the same, the length in one axial direction and the length in the direction orthogonal to it) of 100 particles are measured, and the average value is calculated to obtain the average particle size, and the average value of the ratio of the long diameter to the short diameter is used to obtain the long diameter/short diameter ratio.

As the porous cellulose particles, those commercially available as "Viscopearl" from Rengo Co., Ltd., and those described in JP 2001-323095 A, JP 2004-115284 A, and the like can be suitably used.

The content of the porous cellulose particles is not particularly limited and can be appropriately adjusted depending on, for example, the tire category to which it is applied, the tire member, target performance, and the like. For example, the content of the porous cellulose particles is preferably in the range of 0.3 to 20 parts by mass, more preferably in the range of 1 to 15 parts by mass, and still more preferably in the range of 3 to 15 parts by mass, per 100 parts by mass of the rubber component (A).

(Solid Fine Particles)

The rubber composition obtained by the method for producing a rubber composition of the present embodiment may contain solid fine particles. By blending the solid fine particles into the rubber composition, on-ice performance can be improved. The solid fine particles preferably have an average particle diameter of 1 μm or more, more preferably 1000 μm or less, and still more preferably 300 μm or less. As the solid fine particles, examples include plant-derived powders obtained from plants such as rice husk, walnut powder or walnut shells; animal-derived powders obtained from animals such as eggshell (eggshell powder), bone powder; natural mineral-derived powders such as shirasu; inorganic fine particles such as graphite, zinc oxide whiskers; water-soluble metal salt fine particles such as magnesium sulfate, metal salts of lignin sulfonic acid; non-metallic fibers such as glass fiber; and the like. Among these, rice husk, walnut shell, eggshell, and shirasu are preferred.

The content of the solid fine particles is not particularly limited and can be appropriately adjusted depending on, for example, the tire category to which it is applied, the tire member, target performance, and the like. For example, the content of the solid fine particles is preferably in the range of 0.3 to 20 parts by mass, more preferably in the range of 1 to 15 parts by mass, and still more preferably in the range of 3 to 15 parts by mass, per 100 parts by mass of the rubber component (A).

(Others)

The rubber composition obtained by the method for producing a rubber composition of the present embodiment may further contain, in addition to the above components, various additives generally used in the tire industry, such as organic peroxides. The content of these additives is not particularly limited and can be appropriately adjusted depending on, for example, the tire category to which it is applied, the tire member, target performance, and the like. For example, the content is preferably in the range of 0.1 to 200 parts by mass per 100 parts by mass of the rubber component (A).

(Applications)

The rubber composition obtained by the method for producing a rubber composition of the present embodiment can be applied to various constituent members of a tire, for example, tread (cap tread, base tread, under tread), cushion

rubber, shoulder, sidewall, clinch, bead filler, coating rubber for carcass, insulation, chafer, inner liner, and the like, and can also be used for side reinforcing layers of run flat tires and the like. In addition to tires, the rubber composition of the present embodiment can also be applied to rubber crawlers, seismic isolation rubber, hoses, and the like.

For example, a tire can be produced by a conventional method using the above-described rubber composition. The tire may be obtained by molding using an unvulcanized rubber composition and then vulcanizing according to the type of tire to be applied, or by molding using a semi-vulcanized rubber that has undergone a preliminary vulcanization step and then further vulcanizing. The tire is preferably a pneumatic tire, and as the gas to be filled in the pneumatic tire, in addition to ordinary air or air with adjusted oxygen partial pressure, inert gases such as nitrogen, argon, and helium can be used.

## EXAMPLES

Hereinafter, the present invention will be described in more detail with reference to examples, but the present invention is not limited to the following examples in any way.

<Preparation and Evaluation of Rubber Compositions of Comparative Example 1 and Example 1>

A rubber composition is prepared by kneading in the order of the first stage of kneading and the final stage of kneading using a conventional Banbury mixer according to the formulation shown in Table 1. The maximum temperature of the rubber composition in the first stage of kneading is set to 170°C, and the maximum temperature of the rubber composition in the final stage of kneading is set to 110°C. For the rubber composition obtained in the final stage of kneading, the total mass ratio of materials derived from biological resources (biomass resources) and materials derived from recycled resources is calculated to determine the sustainable material ratio, and further, low heat generating property is evaluated by the following method.

<Evaluation of Low Heat Generating Property>

After vulcanizing the obtained rubber composition at 160°C for 20 minutes, tan $\delta$ is measured at 60°C, 5% dynamic strain, and 15 Hz using a viscoelasticity meter (manufactured by Rheometric Scientific), and the reciprocal index is displayed with the tan $\delta$ of Comparative Example 1 set to 100. The larger the index value, the smaller the tan $\delta$, indicating better low heat generating property.

<Preparation and Evaluation of Rubber Composition of Comparative Example 2>

A rubber composition was prepared by kneading in the order of the first stage of kneading and the final stage of kneading using a conventional Banbury mixer according to the formulation shown in Table 1. The maximum temperature of the rubber composition in the first stage of kneading was set to 170°C, and the maximum temperature of the rubber composition in the final stage of kneading was set to 110°C. For the rubber composition obtained in the final stage of kneading, the total mass ratio of materials derived from biological resources (biomass resources) and materials derived from recycled resources was calculated to determine the sustainable material ratio, and further, low heat generating property was evaluated by the following method.

<Evaluation of Low Heat Generating Property>

After vulcanizing the obtained rubber composition at 160°C for 20 minutes, tan $\delta$ was measured at 60°C, 5% dynamic strain, and 15 Hz using a viscoelasticity meter (manufactured by Rheometric Scientific), and the reciprocal index was displayed with the tan $\delta$ of Comparative Example 1 set to 100. The larger the index value, the smaller the tan $\delta$, indicating better low heat generating property.

[Table 1]

| | | | | Comparative Example 1 | Comparative Example 2 | Example 1 |
|---|---|---|---|---|---|---|
| Formulation | First stage of kneading | SBR *1 | Parts by mass | 100 | 100 | 100 |
| | | Aromatic oil *2 | | 20 | 20 | 20 |
| | | Carbon black *3 | | 10 | 10 | 10 |
| | | Mineral-derived silica *4 | | 70 | 70 | - |
| | | Plant-derived silica *5 | | - | - | 70 |
| | | Silane coupling agent *6 | | 5.5 | 5.5 | 5.5 |
| | | Glycerin fatty acid ester *7 | | - | 2.0 | 2.0 |
| | | Stearic acid | | 2.0 | 2.0 | 2.0 |
| | | Antioxidant 6C *8 | | 1.0 | 1.0 | 1.0 |
| | | Diethylthiourea *9 | | - | 1.0 | 1.0 |
| | Final stage of kneading | Zinc white | | 2.5 | 3.0 | 3.0 |
| | | Vulcanization accelerator DPG *10 | | 1.40 | 0.80 | 0.80 |
| | | Vulcanization accelerator DM *11 | | 2.00 | 2.00 | 2.00 |
| | | Vulcanization accelerator NS *12 | | 0.70 | 0.70 | 0.70 |
| | | Sulfur | | 1.5 | 1.5 | 1.5 |

(continued)

| | | | Comparative Example 1 | Comparative Example 2 | Example 1 |
|---|---|---|---|---|---|
| Evaluation | Total parts by mass in formulation | Parts by mass | 216.6 | 219.5 | 219.5 |
| | Parts by mass of sustainable materials in formulation | Parts by mass | 0 | 0 | 70 |
| | Sustainable material ratio | Mass% | 0 | 0 | 31.9 |
| | Low heat generating property | Index | 100 | 116 | 116 |

*1 SBR: Styrene-butadiene copolymer rubber, manufactured by Asahi Kasei Corporation, solution-polymerized SBR, trade name "Tufdene 2000"
*2 Aromatic oil: Manufactured by FUJI KOSAN COMPANY, LTD., trade name "Aromax #3"
*3 Carbon black: Manufactured by Mitsubishi Chemical Corporation, trade name "Diablack N234," ISAF-HS
*4 Mineral-derived silica: Manufactured by Tosoh Silica Corporation, trade name "Nipsil AQ"
*5 Plant-derived silica: Rice husk silica
*6 Silane coupling agent: Manufactured by Degussa, trade name "Si69"
*7 Glycerin fatty acid ester: Prepared by synthesizing according to the method described in Example 1 of International Publication No. 2014/098155, replacing the fatty acid with palm-derived hardened fatty acid of the same molar amount instead of octanoic acid, and further preparing by molecular distillation; content of glycerin fatty acid monoester = 97 mass%, 54 mass% of constituent fatty acids is stearic acid, 42 mass% is palmitic acid, and 4 mass% is other fatty acids
*8 Antioxidant 6C: Manufactured by Ouchi Shinko Chemical Industrial Co., Ltd., trade name "Nocrac 6C," N-(1,3-dimethylbutyl)-N'-phenyl-p-phenylenediamine
*9 Diethylthiourea: Manufactured by Rhein Chemie, trade name "Rhenogran ETU-80," N,N'-diethylthiourea
*10 Vulcanization accelerator DPG: Manufactured by Ouchi Shinko Chemical Industrial Co., Ltd., trade name "Nocceler D," 1,3-diphenylguanidine
*11 Vulcanization accelerator DM: Manufactured by Ouchi Shinko Chemical Industrial Co., Ltd., trade name "Nocceler DM," di-2-benzothiazolyl disulfide
*12 Vulcanization accelerator NS: Manufactured by Ouchi Shinko Chemical Industrial Co., Ltd., trade name "Nocceler NS-F," N-tert-butyl-2-benzothiazolesulfenamide

From Table 1, it can be seen that the rubber composition of the example produced by the method according to the present invention is excellent in low heat generating property and has an improved ratio of sustainable materials, and by applying it to rubber products, the ratio of sustainable materials in rubber products can be improved.

INDUSTRIAL APPLICABILITY

The rubber composition produced by the method of the present invention can be used for rubber products such as tires, rubber crawlers, and seismic isolation rubber.

## Claims

1. A method for producing a rubber composition containing a rubber component (A) including at least one of natural rubber and synthetic diene-based rubber, a filler including an inorganic filler (B), a silane coupling agent (C), and a silica-silane coupling agent reaction accelerator compound (D), wherein

    the inorganic filler (B) includes plant-derived silica (B1), and
    the rubber composition is kneaded in a plurality of stages, and the rubber component (A), all or part of the inorganic filler (B), all or part of the silane coupling agent (C), and the silica-silane coupling agent reaction accelerator compound (D) are kneaded in a first stage of kneading.

2. The method for producing a rubber composition according to claim 1, wherein the silica-silane coupling agent reaction accelerator compound (D) is at least one selected from the group consisting of a guanidine, a thiuram, a dithiocarbamate, a thiourea, a xanthate, a tertiary amine compound, an inorganic salt hydrate, 1,2-benzenediol, an imidazole compound, an organic sulfonic acid, and water.

3. The method for producing a rubber composition according to claim 1, wherein, in the first stage of kneading, an organic acid compound (E) is further kneaded, and a number X of molecules of the organic acid compound (E) in the rubber composition in the first stage has a relationship in formula (1), shown below:

$$0 \leq X \leq 1.5 \times Y \quad \cdots \quad (1)$$

with a number Y of molecules of the silica-silane coupling agent reaction accelerator compound (D).

4. The method for producing a rubber composition according to claim 1, wherein a maximum temperature of the rubber composition in the first stage of kneading is 120°C to 190°C.

5. The method for producing a rubber composition according to claim 1, wherein the inorganic filler (B) accounts for 30 mass% or more of the filler.

6. The method for producing a rubber composition according to claim 1, wherein a number of molecules of the silica-silane coupling agent reaction accelerator compound (D) in the rubber composition in the first stage of kneading is 0.1 times to 1.0 times a number of molecules of the silane coupling agent (C).

7. The method for producing a rubber composition according to claim 2, wherein the guanidine is 1,3-diphenylguanidine.

8. The method for producing a rubber composition according to claim 2, wherein the thiuram is at least one compound selected from tetrakis(2-ethylhexyl)thiuram disulfide and tetrabenzylthiuram disulfide.

9. The method for producing a rubber composition according to claim 2, wherein the thiourea is at least one compound selected from N,N'-diethylthiourea, trimethylthiourea, N,N'-diphenylthiourea, and N,N'-dimethylthiourea.

10. The method for producing a rubber composition according to claim 2, wherein the dithiocarbamate is at least one compound selected from zinc dibenzyldithiocarbamate, zinc N-ethyl-N-phenyldithiocarbamate, zinc dimethyldithiocarbamate, and copper dimethyldithiocarbamate.

11. The method for producing a rubber composition according to claim 2, wherein the xanthate is zinc isopropylxanthate.

12. The method for producing a rubber composition according to claim 2, wherein the tertiary amine compound is represented by general formula (i), shown below:

[Chem. 1]

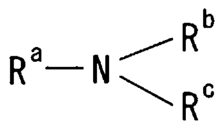

···(i)

where, in general formula (i), $R^a$, $R^b$, and $R^c$ may be the same or different, and each is one selected from a methyl group, an alkyl group having 2 to 36 carbon atoms, an alkenyl group having 8 to 36 carbon atoms, a cyclohexyl group, and a benzyl group.

13. The method for producing a rubber composition according to claim 2, wherein the inorganic salt hydrate is sodium borate hydrate.

14. The method for producing a rubber composition according to claim 2, wherein the imidazole compound is represented by general formula (ii), shown below:

[Chem. 2]

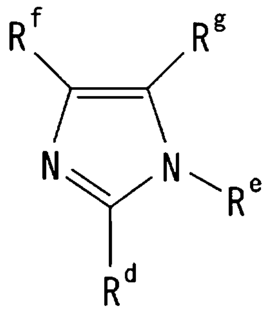

· · · (ii)

where, in general formula (ii), $R^d$, $R^e$, $R^f$, and $R^g$ may be the same or different, and each is a hydrogen atom or a monovalent organic group, with a proviso that two or more of $R^d$, $R^e$, $R^f$, and $R^g$ may be bonded to form a ring.

**15.** The method for producing a rubber composition according to claim 2, wherein the organic sulfonic acid is at least one compound selected from p-toluenesulfonic acid and benzenesulfonic acid.

**16.** The method for producing a rubber composition according to claim 3, wherein stearic acid accounts for 50 mol% or more of the organic acid compound (E) contained in the rubber composition in the first stage of kneading.

**17.** The method for producing a rubber composition according to claim 3, wherein

the rubber component (A) includes at least one selected from emulsion-polymerized styrene-butadiene copolymer and natural rubber, and
at least one compound selected from rosin acid and fatty acid contained in the at least one selected from emulsion-polymerized styrene-butadiene copolymer and natural rubber accounts for 50 mol% or more of the organic acid compound (E) contained in the rubber composition in the first stage of kneading.

**18.** The method for producing a rubber composition according to claim 1, wherein, in the first stage of kneading, the silica-silane coupling agent reaction accelerator compound (D) is added and further kneaded after the rubber component (A), all or part of the inorganic filler (B), and all or part of the silane coupling agent (C) have been kneaded.

**19.** The method for producing a rubber composition according to claim 1, wherein the plant-derived silica (B1) is silica derived from a gramineous plant.

**20.** The method for producing a rubber composition according to claim 19, wherein the plant-derived silica (B1) is silica derived from rice husk.

## INTERNATIONAL SEARCH REPORT

International application No.
**PCT/JP2024/027032**

**A. CLASSIFICATION OF SUBJECT MATTER**

***C08L 9/00***(2006.01)i; ***C08K 3/013***(2018.01)i; ***C08K 3/36***(2006.01)i; ***C08K 3/38***(2006.01)i; ***C08K 5/09***(2006.01)i; ***C08K 5/17***(2006.01)i; ***C08K 5/31***(2006.01)i; ***C08K 5/38***(2006.01)i; ***C08K 5/39***(2006.01)i; ***C08K 5/40***(2006.01)i; ***C08K 5/42***(2006.01)i; ***C08K 5/405***(2006.01)i; ***C08K 5/3445***(2006.01)i; ***C08L 7/00***(2006.01)i
FI: C08L9/00; C08L7/00; C08K3/013; C08K3/36; C08K5/31; C08K5/40; C08K5/405; C08K5/39; C08K5/38; C08K5/17; C08K3/38; C08K5/3445; C08K5/42; C08K5/09

According to International Patent Classification (IPC) or to both national classification and IPC

**B. FIELDS SEARCHED**

Minimum documentation searched (classification system followed by classification symbols)

C08L9/00; C08K3/013; C08K3/36; C08K3/38; C08K5/09; C08K5/17; C08K5/31; C08K5/38; C08K5/39; C08K5/40; C08K5/42; C08K5/405; C08K5/3445; C08L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-179159 A (SUMITOMO RUBBER INDUSTRIES, LTD.) 02 December 2022 (2022-12-02)<br>examples 1-9 | 1-20 |
| A | JP 2022-179158 A (SUMITOMO RUBBER INDUSTRIES, LTD.) 02 December 2022 (2022-12-02)<br>examples 1-11 | 1-20 |
| A | JP 2022-179157 A (SUMITOMO RUBBER INDUSTRIES, LTD.) 02 December 2022 (2022-12-02)<br>examples 1-7 | 1-20 |
| A | JP 2019-038728 A (AJINOMOTO CO., INC.) 14 March 2019 (2019-03-14)<br>entire text | 1-20 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027032**

| Patent document cited in search report | Publication date (day/month/year) | Patent family member(s) | Publication date (day/month/year) |
|---|---|---|---|
| JP 2022-179159 A | 02 December 2022 | EP 4092077 A2<br>examples 1-9 | |
| JP 2022-179158 A | 02 December 2022 | EP 4091836 A1<br>examples 1-11 | |
| JP 2022-179157 A | 02 December 2022 | EP 4092078 A2<br>examples 1-7 | |
| JP 2019-038728 A | 14 March 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002521515 A
- JP 2002521516 A
- JP 2003523472 A
- JP 2003530443 A
- JP 2022140390 A
- WO 2016194316 A
- WO 2019117256 A
- JP 2022179158 A
- JP 2019038728 A
- JP 2015520259 A
- EP 3427975 A
- JP 6856781 B
- EP 3173251 A
- JP 2005139239 A
- JP 2001323095 A
- JP 2004115284 A
- WO 2014098155 A


### Non-patent literature cited in the description


- *Rubber Chemistry and Technology*, 2012, vol. 85 (3), 408-449
- Comparison of surface morphology and chemistry of pyrolytic carbon black and commercial carbon black. *Powder Technology*, 2005, vol. 160, 190-193